Europäisches Patentamt

European Patent Office

Office européen des brevets

(11) Veröffentlichungsnummer: **0 213 431**
**A2**

# (12) EUROPÄISCHE PATENTANMELDUNG

(21) Anmeldenummer: 86110769.6

(51) Int. Cl.⁴: **A01B 15/00**

(22) Anmeldetag: 04.08.86

(30) Priorität: 03.08.85 DE 3527904

(43) Veröffentlichungstag der Anmeldung:
**11.03.87 Patentblatt 87/11**

(84) Benannte Vertragsstaaten:
**AT BE CH DE FR GB IT LI NL SE**

(71) Anmelder: **Möller, Hans**
**Stettiner Strasse 7**
**D-2250 Husum(DE)**

(72) Erfinder: **Möller, Hans**
**Stettiner Strasse 7**
**D-2250 Husum(DE)**

(54) Pflugkörper.

(57) Dieser Pflugkörper weist eine Führungsschale für den umzuwendenden Erdbalken auf, die aus einem der Schar (6) oder den Scharteilen (6a, 6b) nachgeschalteten, der Erdbalkenunterseite (a) zugeordneten Teilblech (7) besteht, sowie aus einem zweiten, auf die beetseitige Seitenfläche (b) des Erdbalkens einwirkendes Teilblech (9). Dabei ist die Führungsschale entweder so geformt, daß der Erdbalken zum Beet hin verlagert wird, so daß sich zwischen der Furchenwand (d') und dem erdbalkenunterseitigen,der Furchenwand (d') zugeordneten Eckpunkt (A) bereits am Anfang der Umwendung ein Abstand ausbildet, oder sich dieser ausbildet durch aus der Vertikalen gegen die Landseite verschwenkte Vorwerkzeuge (3, 6b) und dementsprechend ausgeformte nachgeschaltete Teilbleche.

Während der Umwendung kann sich der Erdbalken frei in Richtung der Erdbalkenoberseite (c) und der landseitigen Seitenfläche (d) entspannen, wodurch ein leichtzügiges, sicheres Arbeiten gewährleistet ist.

Wahlweise ist eine Furchenräumung sowohl größer oder gleich der Pflugkörperarbeitsbreite als auch eine verringerte oder keine Furchenräumung erzielbar sowie eine Verringerung oder Aufhebung der Pflugkörperlängsabstände bei mehrschariger Anordnung.

## Pflugkörper

Die Erfindung betrifft einen Pflugkörper zum Wenden von Erdböden in Form von einzelnen rechteckigen Erdbalken nach dem Oberbegriff des Anspruchs 1.

Bei einem solchen bekannten Pflug (US-PS 3 063 506) sind die Pflugkörper ohne Längsabstand voneinander angeordnet, um mit wachsender Pflugkörperanzahl eine Zunahme der Baulänge des Pfluges zu vermeiden. Die Umwendung der Erdbalken wird nach diesem Vorschlag erreicht, indem auf die Unterseite des rechteckigen Erdbalkenquerschnittes ein Streichblech derart einwirkt, daß die zuunterst liegende Seitenfläche in Richtung der beetseitigen Seitenfläche des Erdbalkens gelenkt wird, während ein weiteres Streichblech, das -wie bei einem anderen bekannten Pflug (DE-PS 2 947 724) -auf die beetseitige Seitenfläche des Erdbalkens einwirkt, wodurch diese Seitenfläche in Richtung der Landseite gelenkt wird. Dadurch soll eine Umwendung der Erdbalken und ihre Wiederablage innerhalb der jeweiligen Pflugkörperschnittbreiten, also der von den jeweiligen Pflugscharen während der Vorfahrt des Pfluges überstrichenen Fläche, ermöglicht werden.

Nach Erreichung eines Wendungswinkels im Bereich um 90° schlägt die US-PS ein weiteres Streichblech vor, das auf die ehemalige Erdbalkenoberseite einwirkt. Eine Einwirkung auf diese, der Erdbalkenunterseite gegenüberliegende Fläche, ist ferner bei einem weiteren Vorschlag, betreffend einen Spezialpflug für flaches Pflügen in Grünland (GB-PS 526 685), gegeben.

Bei Pflugkörpern mit rechteckigen Erdbalkenquerschnitten nimmt die Erdbalkenbreite infolge des Ausschwenkens der diagonal gegenüberliegenden Eckpunkte des Erdbalkenquerschnittes während der Umwendung bis zur Länge der Diagonalen (e) zu, e = $\sqrt{(a^2 + b^2)}$. Bei dem für eine sichere Umwendung ohne Zurückkippen der abgelegten Erdbalken günstigen, üblichen Verhältnisses von Pflugkörperarbeitsbreite zu Tiefgang wie 1,41 : 1 ergäbe sich bereits eine Zunahme der Ausdehnung des Erdbalkens in die Breite um 22,9%. Dabei ist eine weitere Verbreiterung infolge Auflockerung noch nicht berücksichtigt.

Da jedoch der rechteckige Erdbalkenquerschnitt innerhalb des Arbeitsbreitenbereichs des jeweiligen Pflugkörpers umgewendet werden soll, steht kein Freiraum für eine Ausdehnung des Erdbalkens in die Breite zur Verfügung, weil sich zu beiden Seiten des Erdbalkens sogleich entweder Furchenwände oder Pflugbauteile befinden: an der dem Beet zugewandten Seite des Erdbalkens das auf die beetseitige Seitenfläche des Erdbalkens einwirkende Streichblech und an der gegenüberliegenden landseitigen Seitenfläche des Erdbalkens entweder die Furchenwand oder aber an ihrerstatt die Streichblechrückseite des sich landseitig anschließenden, nächstliegenden Pflugkörpers, dessen Streichblechvorderseite auf die beetseitige Seitenfläche des von letztgenanntem Pflugkörper gebildeten Erdbalken einwirkt.

Die eingangs beschriebene Breitenzunahme des Erdbalkens wird dabei noch durch das dem Erdboden eigentümliche Verhalten während des Pflügens verstärkt: Infolge der Vorfahrt des Pfluges werden auf das Erdreich, aus dem der Erdbalken gebildet werden soll, durch den Druck der Scharschneide sowie dem der Vorwerkzeuge wie Sechschneiden usw. und einem weiteren Staudruck, der dem Pflugkörper vorauseilt infolge der notwendigen Beschleunigung der ehedem ruhenden Erdbalkenmasse während ihrer Umwendung auf den Pflugwerkzeugen, so daß ohnehin bereits erhebliche Kräfte auf den Erdboden ausgeübt werden. Wie Betriebsversuche gezeigt haben, wird der Erdboden beim Pflügen bereits bis zu 40 cm vor der Pflugschar in Bewegung versetzt. Der Boden versucht, dem Pflugkörper in Fahrtrichtung, nach oben und zu den Seiten hin auszuweichen. Es erfolgt eine bestimmte Vorwärtsbewegung des Erdbodens, bevor der Erdbalken gebildet ist, und da diese Erdbewegungen zwangsläufig beschränkt sind, weil die Erde noch kompakt vor dem Pflug ansteht, findet dementsprechend eine gewisse Spannung des Erdbodenbereiches statt, aus dem die Erdbalken zu bilden sind.

Dadurch werden -insbesondere in bruchtrockenen, sich im günstigsten Bearbeitungszustand befindlichen Böden-Spannungsrisse erzeugt und sobald der Erdbalken gebildet ist, erfolgt eine Entspannung des Erdbalkens. Diese erfolgt also bereits bei Einleitung der Umwendung, d.h., im vorderen Teil des Pfluges und führt zur Vergrößerung der Spannungsrisse und zu einer Volumenvergrößerung überhaupt, welche die eingangs beschriebene Zunahme der Erdbalkenbreite infolge der Umwendung noch verstärkt.

Diese Breitenzunahmen bewirken einen vermehrten Druck der Pflugstreichbleche, der die vorzeitige Überwindung der Zusammenhangskräfte im Erdbalken befördert, also von einer inneren Verscherung bis hin zu seinem Zerbrechen bereits am Anfang des Wendevorganges und/oder dem Festklemmen von Teilen des aufgelösten Erdbalkens im Pflug führen kann. Die Folge wäre ein beginnendes, fortschreitendes Verkleben der Streichbleche, Stauung der Erdmassen an den Streichblechen, an den Grindeln und bereits auch vor dem Pflug, welches die Wendung des Erdbalkens zugunsten eines Wühlens einschränken und die Funktion des Pfluges beeinträchtigen, wenn nicht gänzlich aufheben würde.

Die vorzeitige Auflösung des Erdbalkens im Pflug würde dabei durch den ohnehin aufwendigen Vorschlag in der US-PS, die Arbeitsflächen der Pflugkörper mit Druckluft zu beaufschlagen, nicht verhindert, sondern eher noch beschleunigt werden.

Hieran anschließend, sei noch die Auswirkung wechselnder Arbeitstiefen angesprochen. Vergrößert sich der Tiefgang von Pflügen infolge wechselnder Bodenart oder -zustand im Beet, oder vergrößert sich der Tiefgang einzelner Pflugkörper am Pflug infolge von Bodenunebenheiten, dann nimmt dementsprechend die Höhe bzw. die Dicke des gebildeten Erdbalkens ebenfalls zu. Da ab dem Bereich eines Umwendungswinkels von 90° zwecks Wiederablage in der eigenen Furche und zur Erzielung einer sicheren Umwendung auch ein Streichblech auf die ehemalige, jetzt vertikal stehende Erdbalkenoberseite einwirken soll, ist es erforderlich, daß in der Mitte des Pfluges besagtes Streichblech zu dem auf die Erdbalkenunterseite einwirkenden Streichblech gegenüberliegend und in einem Abstand von ihm angeordnet sein muß, der der angestrebten durchschnittlichen Arbeitstiefe des Pfluges entspricht oder nur um ein Geringes mehr betragen darf. Vergrößert sich nun die Arbeitstiefe des Pfluges insgesamt oder eines Teils der Pflugkörper, z.B. wegen Bodenunebenheiten längs oder quer zur Arbeitsrichtung, dann besteht die Gefahr des Einklemmens des Erdbalkens zwischen den beiden sich im Bereich des Umwendungswinkels von 90° gegenüberliegenden Streichblechen.

Um die Tiefenführung des Pfluges zu verbessern, werden deshalb in der US-PS besondere Stützpontons bzw. Gleitschuhe als Ersatz für Stützräder vorgeschlagen. Diese Vorrichtungen können jedoch nur den Rahmen des Pfluges bzw. die beiden aussenliegenden Pflugkörper in seinem/ihrem Abstand zur Erdbodenoberfläche beeinflussen. Sie berücksichtigen nicht die Bodenunebenheiten quer zur Arbeitsrichtung zwischen den beiden jeweils aussenliegenden Pflugkörpern. Daraus folgt, daß die mittigen Pflugkörper bei mehrscharigen Pflügen nur entsprechend den aussenliegenden Pflugkörpern geführt werden. Wird nun ein Hügel gepflügt, dann vergrößert sich der Tiefgang der mittigen Pflugkörper und damit die Gefahr des Festklemmens von Erdbalkenteilen im Pflug.

Es sei auch erwähnt, daß dieser Vorschlag einen besonderen Einstellaufwand im Pflug erfordert, wenn die durchschnittlich angestrebte Arbeitstiefe verändert werden soll, weil dann eine Veränderung des Abstandes der gegenüberliegenden Streichblechflächen zu erfolgen hätte.

Die Aufgabe der Erfindung ist es, einen Pflugkörper zur Bearbeitung von Erdböden zu schaffen, der auf einfache Weise eine sichere Führung des Erdbalkens während seiner Umwendung und Ablage ermöglicht, ohne auf eine starke Pressung des Furchenrückens und des übrigen Erdbalkens angewiesen zu sein, wobei wahlweise eine Ausräumung der Furche sowohl größer oder gleich der Arbeitsbreite des Pflugkörpers als auch eine geringere oder keine Ausräumung der Furche ermöglicht wird, und daß bei einer mehrscharigen Anordnung wahlweise eine verringerte oder keine Zunahme der Baulänge des Pfluges gewährleistet wird.

Diese Aufgabe wird durch die im kennzeichnenden Teil des Anspruchs 1 genannten Merkmale gelöst.

Merkmale zur weiteren Ausgestaltung der Erfindung gehen aus den Unteransprüchen oder der Beschreibung von Ausführungsbeispielen hervor.

Als Vorteil kann zunächst erwähnt werden, daß die Ausbildung von langgestreckten Körperformen ermöglicht wird, in denen für den Erdbalken ein ungehinderter Durchgang im Pflug gewährleistet ist.

Die Formänderungsarbeit durch die Pflugwerkzeuge am Erdbalken wird verringert. Zudem trägt das Teilblech 9 bzw. dessen Verlängerungen den Erdbalken bis zum Ende seiner Umwendung. Damit ist es ihm ermöglicht, während der Dauer seiner Umwendung auf einem gleich der Gespannvorfahrt beschleunigten Werkzeug entlangzugleiten und entsprechend der Teilblechausformungen je nach Seitenrichtwinkelgröße und -lage seine Relativgeschwindigkeit zu entwickeln. Diese Vorteile wirken sich weiter in einer Verringerung des Zugkraftbedarfes aus.

In feuchteren Böden wird die verdichtende Wirkung der Pflugwerkzeuge gemindert. Trockene und schüttend zu pflügende Böden werden nicht überlockert. Dadurch können die Aufwendungen zur mechanischen Rückverfestigung des Oberbodens verringert werden oder sind gänzlich entbehrlich.

Eine sichere Umwendung ohne Zurückkippen von Erdschollen und die entsprechend der Auslegung des Pflugkörpers projektierte Furchenräumung wird auch erreicht, wenn der Drehsinn der Umwendung gegen den Hang gerichtet ist. Jeder Erdbalken wird somit gleichmäßig umgewendet. Dadurch ist eine regelmäßig geformte Beetoberfläche erzielbar, die den Nachbearbeitungsaufwand zur Saatbettbereitung verringert.

Es ist der Einsatz tief sowie tief und breit arbeitender Vorschäler/Einlegebleche verbessert möglich, da der Pflug körper infolge seines verringerten Erdstaus die Zunahme des Staudrucks der Vorwerkzeuge bewältigt. Durch diese Vorwerkzeuge sind die Umwendungswinkel in nicht schüttend zu pflügenden Böden bzw. bei nicht oder nur wenig in sich verscherenden Erdbalken zu erhöhen, ohne daß die Arbeitstiefe des Pflugkörpers verringert werden müßte.

Durch breit und tief arbeitende Vorschäler kann der Bodenschluß verbessert sowie auf schwereren Böden bei der Saatfurche erforderlichenfalls gezielt die oben liegenden Erdbalkenteile gebrochen werden.

Entsprechend des Achsenverlaufs der durch die Teilbleche 7 und 9 abgebildeten Schraubenlinien in Bezug zur Arbeitsrichtung (Fahrtrichtung) können einmal Pflugkörper -bei mehrschariger Anordnung mit Körperlängsabständen zueinanderausgebildet werden, deren Furchenräumung größer, gleich groß oder kleiner als die Pflugkörperarbeitsbreite ist und zum anderen Pflugkörperausführungen bis hin zu solchen ohne Furchenräumung und ohne Körperlängsabständen zueinander bei mehrschariger Anordnung ausgebildet werden. Dabei können sie bei Verwendung entsprechend ausgestalteter Vorwerkzeuge das Pflügen einzelner Reihen ermöglichen. Weiter können entsprechende Ausführungsformen mit verkürztem oder ohne Längsabstand zueinander zu mehrscharigen Pflügen montiert werden. Diese Pflüge sind infolge ihrer konstanten oder nahezu konstanten Baulänge mei mehrschariger Ausführung mit Saatbettbearbeitungs-und Sägeräten zu einer Pflugsaat-Geräteeinheit kombinierbar. Damit sind die großen motorischen Kräfte leistungsstarker Zugmaschinen ausnutzbar, ohne daß auf eine für die Arbeitsqualität und den Energieaufwand nachteilige Erhöhung der Arbeitsgeschwindigkeit ausgewichen werden müßte.

Anschließend sollen die Vorteile der einzelnen Pflugkörperausgestaltungen gemäß der Unteransprüche aufgeführt werden. Eine Ausgestaltung gemäß Unteranspruch 2 bietet den Vorteil einfacher Montage und der einfachen Austauschbarkeit von Verschleißteilen.

Eine Ausgestaltung gemäß Unteranspruch 3 bietet folgende Vorteile:

Ein aus Trägern gebildeter Rumpf ermöglicht die wahlweise Ausstattung durch Streichbleche mit kompakten Arbeitsflächen oder durch streifenförmige Teilbleche, da durch diese aufgegliederte Bauweise des Rumpfes in längs-und quertragende Elemente Freiräume zum Herabfallen von zwischen den Streifen durchrieselnden Erdreiches vorhanden sind.

Es sind Gewichtseinsparungen bei langgestreckter Körperform sowie Stabilitätsverbesserungen infolge erweiterter Möglichkeiten in der Wärmebehandlung zu erreichen gegenüber einem Rumpf aus Vollmaterial einheitlicher Materialstärke.

Eine Ausgestaltung gemäß Unteranspruch 4 bietet folgende Vorteile:

So wird auch bei langgestreckter Körperform durch Verringe-ung rung der Auflageflächen der notwendige spezifische Mindestanpreßdruck des Erdbalkens auf die Arbeitsflächen zur Verhinderung des Anhaften von Erde erreicht.

Zur Anpassung an unterschiedliche Bodenverhältnisse können einzelne Streifen gegen breitere oder schmalere ausgetauscht oder demontiert werden.

Streifenförmige Teilbleche verringern bei den erfindungsgemäßen Pflugkörperausführungsformen den Zugkraftbedarf, weil die Teilblechstreifen entsprechend des Erdbalkenbahnverlaufes der um die gemeinsame Schraubenachse gebildeten Schraubenlinie unter Berücksichtigung der Volumenvergrößerung des Erdbalkens während seiner Umwendung ausgeführt werden können. Somit wirkt der jeweilige Teilblechstreifen während der Umwendung auf einen gleichen oder nahezu gleichen Flächenausschnitt der betreffenden Erdbalkenseite ein. Dadurch wird der Gleitreibungswiderstand zwischen Erdbalken und Teilblechstreifen verringert und die Führung des Erdbalkens während der Umwendung verbessert. In feuchten und/oder wenig verscherenden Böden wird zudem vermieden, daß die Streifenteilbleche gegen Ende der Umwendung noch großflächig die Erdbalkenseiten a und b überstreichen und dadurch viele Poren -vergleichbar der Wirkungsweise einer Maurerkellezustreichen.

Zugleich wird die Bildung von Längsrissen im Erdbalken und die Krümelwirkung begünstigt. Die Ausbildung von Längsrissen ermöglicht das Legen einer gebrochenen Furche beim Pflügen zur Saat, ohne Gefahr zu laufen, die Ausbildung eines unregelmäßigen Furchenanschlusses (bis hin zur Ausbildung der sog. Hasenlöcher) in Kauf nehmen zu müssen.

Eine Ausgestaltung gemäß Unteranspruch 5 bietet folgende Vorteile:

Dadurch wird das Auseinanderdrängen des Erdbalkens während seiner Loslösung vom Furchengrund und seines Aufgleitens auf das der Schar nachgeschalteten Teilblechs 7 verringert. Eine mechanische Überlockerung des Bodens, die nur eine nichtstabile Krümelung schafft, wird eingeschränkt oder vermieden.

Die Abdrängung des Pflugkörpers gegen die Furchenwand wird verringert, so daß die Anlagen kleiner ausgelegt werden können. Ebenso wird beim Auffahren auf Fremdkörper (Steine) der Pflugkörper nicht oder nur wenig abgedrängt, so daß für eine Steinsicherung die alleinige Ausschwenkrichtung entgegen der Arbeitsrichtung ausreichend ist.

Eine Ausgestaltung gemäß Unteranspruch 6 bietet folgende Vorteile:

Wechselspitzen schützen die Scharschneide vor raschem Verschleiß und Ausbrechen beim Auffahren auf Hindernisse. Dadurch ist es ermöglicht, die Scharschneide dünner auszuziehen.

Da die Wechselspitzen etwas tiefer als die Scharschneide arbeiten, fungiert diese im wesentlichen lediglich als eine Art Nachschneidemesser zur Durchtrennung von Pflanzenwurzeln und zähen Bodenteilen. Somit wird ihre Standzeit erhöht.

Werden mehrere Wechselspitzen mit seitlichem Abstand nebeneinander angeordnet, bewirken sie das eigentliche Abtrennen des Erdbalkens vom Unterboden durch Abscheren. Dadurch werden weniger Poren als bei ausschließlicher Abtrennung vermittels der Scharschneide zugestrichen.

Eine Ausgestaltung gemäß Unteranspruch 7 bewahrt den vorderen Halter und die Teilblechvorderkante des zweiten Teilblechs vor Verschleiß durch Erdbodenabrieb. Der Halterschutz/Teilblechvorderkantenschutz ist einfach auswechselbar.

Eine Ausgestaltung gemäß Unteranspruch 8 bietet folgende Vorteile:

Gegen Ende der Umwendung wird dem Erdbalken die zur Umwendung erforderliche Kraft auch durch das Teilblech 9 bzw. dessen Verlängerung 10 erteilt. Dadurch kann das Teilblech 7 in seinem hinteren Bereich verkürzt ausgeführt werden, so daß es eine geringere Verwindung aufweist. Hierdurch wird eine Pressung des Furchenrückens sowie ein 'Reiten' des Streichblechendes auf dem umgewendeten Furchenrücken vermieden, welches den Tiefgang begrenzt und den Erdbalken rückverdichtet.

Durch den Vorkörper 2 kann auf das Ziehen einer Spaltfurche am Beetanfang verzichtet werden.

Eine Ausgestaltung gemäß Unteranspruch 9 bietet folgende Vorteile:

Der Seitentransport des Erdbalkens und die Furchenräumung wird verringert. Da bei Verwendung relativ schmaler Bereifung an der Zugmaschine oder dem Führen der Zugmaschine neben der Furche die Ausräumung der Furche verkleinert werden kann, sind damit auch die zur Umwendung erforderlichen Kräfte zu reduzieren und geringere Seitenkräfte an der Furchenwand abzustützen, die dadurch weniger leicht einstürzt. Die Anlage kann kleiner ausgelegt und Vorschäler bzw. Einlegebleche können mit verringertem Seitenrichtwinkel ausgestattet werden. Dadurch wird die Pflugarbeit verstopfungssicherer und der Seitentransport des abgeschälten Erdstreifens durch Änderungen der Arbeitsgeschwindigkeit nur wenig beeinflußt. Somit erfolgt auch bei höherer Fahrgeschwindigkeit eine sichere Ablage von unerwünschten, unterzubringenden Pflanzen auf den oder nahe am Furchengrund.

Durch den Vorkörper 2 ist das Legen einer Spaltfurche entbehrlich.

Eine Ausgestaltung gemäß Unteranspruch 10 bietet folgende Vorteile:

Es erfolgt eine gewisse Verzahnung des Erdbalkens mit der Verlängerung 10b des Teilblechs 9. Das Abgleiten des Erdbalkens vom Teilblech 9 bzw. seiner Verlängerungen 10 und 10b wird dadurch verzögert. Noch nach Erreichung eines Umwendungswinkels von 90° kann somit dem Erdbalken in seinen ursprünglich beetseitigen Eckpunkten B und C eine Bewegung in Richtung Landseite erteilt werden. Er folgt damit auch in diesen Eckpunkten bzw. mit dem Volumen dieses Erdbalkenbereiches dem Drehsinn der Umwendungsrichtung.

Den ursprünglich landseitigen, gegenüberliegenden Eckpunkten A und D braucht dementsprechend gegen Ende der Umwendung eine verringerte Relativgeschwindigkeit über das Teilblech 7 bzw. seiner Verlängerung erteilt werden. Die Erzielung eines ausreichenden Umwendungswinkels ist dennoch sichergestellt. Weiter ist es ermöglicht, die Furchenräumung stark zu verringern. Dadurch werden schmalere Ausfurchen am Beetende gelegt. Somit kann der Acker in mehr Beete eingeteilt werden, ohne deshalb große Vertiefungen aufzuweisen. Damit erreicht diese Pflugkörperausbildung, montiert an einem Beetpflugrahmen, eine Arbeitsweise, die sich jener der Wechselpflugbauarten (Drehpflug) annähert, zumal auch durch die Vorkörper 2 die Spaltfurchen an den Beetanfängen eingespart werden können.

Eine Ausgestaltung gemäß Unteranspruch 11 bietet folgende Vorteile:

Das zweite Teilblech 9 tritt nicht oder nur geringfügig über die von der Schar überstrichenen Ackerbreite hinaus. Es wirkt derart auf den Erdbalken ein, daß im Verlauf seiner Umwendung der Eckpunkt C ebenso nicht oder nur unwesentlich über die von der Schar überstrichenen Ackerbreite in Richtung der Beetseite hinaustritt. Der Druck auf die Erdbalkenunterseite a, aus der vor allem der zukünftige Saathorizont gebildet wird, kann weiter verringert werden, weil durch die Einwirkung des zweiten Teilblechs 9 auf die Seitenfläche b der Erdbalken in den Drehsinn der Umwendungsrichtung bewegt wird.

Dieser Pflugkörper benötigt keine offenliegende Furche neben sich. Seine Furchenräumung ist sehr stark verringert oder wahlweise ganz aufgehoben. Somit kann bei einem mehrscharigen Beetpflug, ausgerüstet mit dieser Pflugkörperausgestaltung, eine Arbeitsweise erreicht werden, die der der Wechselpflugbauarten (Drehpflug) entspricht, da an der gleichen Beetseite vor-und zurückgearbeitet werden kann.

Ebenso kann diese Ausgestaltung zum Pflügen einzelner Reihen oder reihenförmiger Beete eingesetzt werden, da die geöffnete Furche weitgehend oder gänzlich von dem aus ihr herausgelösten Erdbalken wiederbelegt wird. Damit steht ein Pflugkörper zur Bearbeitung einzelner Saat-bzw. Pflanzreihen für Reihenkulturen wie Mais, Rüben usw. zur Verfügung. Für ein solches Verfahren war bislang nur die Reihenfräse geeignet. U.a. in erosionsgefährdeten Gebieten kommt der Reihenbearbeitung eine wachsende Bedeutung zu. Der Vorteil dieses Reihenpfluges gegenüber der Bodenfräse ist schon durch den Hinweis zu verdeutlichen, daß die Fräse als Pflugersatzgerät mehrere gravierende Nachteile aufweist, als da sind: unerwünscht intensive Bearbeitung des Bodens, keine Unterbringung unerwünschter Pflanzen, starke Durchlüftung und dementsprechend stärkeres Auflaufen von Unkräutern und -gräsern, höherer spezifischer Energieaufwand und Werkzeugverschleiß.

Des weiteren können entsprechende Ausgestaltungen mit verringertem oder ohne Längsabstand zu einem mehrscharigen Pflug montiert werden. Dadurch wird die Kombination mit zapfwellengetriebenen Sekundärbearbeitungs-und Sä-bzw. Pflanzgeräten zu einer Geräteeinheit ermöglicht. Somit wird das Verfahren "Pflugsaat" insbesondere auch auf schweren Böden einsetzbar, deren Saatbett vorteilhaft durch fremdangetriebene Geräte erstellt wird.

Durch die seitliche Verschiebbarkeit der Pflugkörper ist eine Einstellung auf unterschiedliche Reihenweiten ermöglicht.

Als spezielle vorteilhafte Wirkungen des Reihenpfluges seien abschließend erwähnt: Einmal können Fahrgassen von der Grund bodenbearbeitung ausgenommen werden. Unbearbeiteter Boden ist wesentlich tragfähiger als mechanisch gelockerter. Es können z.B. im Getreidebau mehr Fahrgassen angelegt werden, da bekannt ist, daß es dadurch nicht zu Ertragsminderungen wegen der sog. Randerträge infolge besserer Belichtung der Pflanzen an den Fahrgassenrändern kommen muß. Damit können dann Pflegemaßnahmen mit geringeren Arbeitsbreiten, also mit entsprechend einfacheren, leichteren Geräten beispielsweise zur Ausbringung von Wirtschaftsdüngern in den Bestand, durchgeführt werden. Erntemaschinen können verstärkt oder ausschließlich in den Fahrgassen bewegt werden.

Bei Grünlandumbruch bewirken einzelne unbearbeitete Erdstreifen im Acker, daß sich die Bodenlebewesen nicht mangels anderer Nahrungsquellen auf die Keimlinge der neu ausgesäten oder geplanzten Kulturen konzentrieren und Fraßschäden hervorrufen, wie es bei herkömmlichem Umbruch z.B. durch Tipula (Grauer Wurm) der Fall ist. Dadurch können Bekämpfungsmaßnahmen eingeschränkt werden oder sind gänzlich überflüssig.

Durch bodenwendende Reihenbearbeitung kann der Vorteil einer Pflugfurche im Frühjahr vor der Aussaat zur rascheren Bodenerwärmung in Gebieten mit kälterem Klima genutzt werden, ohne daß der ganze Acker deshalb durchpflügt werden müßte, seine Bodenruhe, die Voraussetzung zur Garebildung, also großflächig gestört werden würde.

Eine Ausgestaltung gemäß Unteranspruch 12 bietet folgende Vorteile:

Einmal wird der unbearbeitete Erdstreifen zwischen nebeneinander oder mit geringfügigem Längsabstand zueinander angeordneten Pflugkörpern bei mehrschariger Ausführung auf den unteren Teil des Oberbodens begrenzt. Die Ackeroberfläche kann durchgängig bearbeitet werden. Zweitens können einzelne Ackerstreifen, beispielsweise zur Anlage von Fahrgassen oder Beeträndern, durch Demontage oder Hochschwenken einzelner Pflugkörper von der Umwendung ausgespart werden. Sie können auch ausgespart werden, wenn beim Anschlußfahren ein Abstand zum Beet eingehalten, also auf Lücke gearbeitet wird.

Eine Ausgestaltung gemäß Unteranspruch 13 bietet folgende Vorteile:

Der gebildete parallelogrammförmige Erdbalkenquerschnitt ermöglicht auf einfache Weise eine stark verringerte Furchenräumung, da die Teilbleche 7 und 9 entsprechend der Größe des Winkels α in einem umgekehrten Verhältnis zu ihm, also spitzwinklig zueinander stehen, dem Erdbalken somit über das Teilblech 9 auch gegen Ende der Umwendung eine in Richtung Landseite wirkende Kraft erteilt werden kann.

Ein derartiger Pflugkörper kann zu einem mehrscharigen Pflug mit verkürzten Körperlängsabständen montiert werden. Damit kann der Ackerschlepper auch vielscharige Pflüge als Anbaugerät tragen. Der Übergang zur komplizierteren und nicht so wendigen Aufsattel-bzw. Anhängepflugbauart kann vermieden oder zumindest hinausgezögert werden.

Die Scheibenseche 3 arbeiten verstopfungssicherer als nichtrotierende Trennvorrichtungen. Zudem wirken sie infolge ihrer Verschwenkung um den Winkel α als rollende Anlagen, weil sie eine Seitenkraftkomponente ausbilden, die entgegen der in landseitiger Richtung von dem Teilblech 7 auf die Anlage 13 ausgeübte Seitenkräfte wirkt, sie also teilweise aufhebt. Rollende Reibung ist weniger kraftaufwendig als die Gleitreibung an der Anlage 13. Die Anlage 13 kann zu einer Leiste verkleinert werden. Bei mehrschariger Ausführung ist es ausreichend, nur den letzten Pflugkörper mit einer Anlage, z.B. in der Art der bekannten Furchenräder, auszurüsten. Diese letztgenannten Vorteile gelten auch für die übrigen Pflugkörperausführungen, die mit Scheibensechen 3 ausgestattet sind, ohne dort nochmals gesondert aufgeführt worden zu sein.

Eine Ausgestaltung nach Unteranspruch 14 bietet folgende Vorteile:

Da diese Pflugkörper bei mehrschariger Ausführung ohne Längsabstände voneinander montiert werden können, ist die Kombination mit Saatbettbearbeitungs-und Sägeräten, beispielsweise der zapfwellengetriebenen Kreiselegge mit angekoppelter Drillmaschine, ermöglicht. Somit kann das Verfahren 'Pflugsaat' nunmehr auch auf - schwereren Böden eingesetzt werden. Dadurch werden Fahrspuren im gelockerten, druckempfindlichen und wenig tragfähigen Boden des zukünftigen Saatbettes durch Vorverlegung auf den unbearbeiteten Acker vor dem Pflug vermieden.

Bisher war diese Einsparung nur durch Einsatz von Pflugsaatgeräten in der Bauart der Nachläufer auf leichten Böden oder unter Verzicht einer wendenden Oberbodenbearbeitung mit Grubber, Fräse o.ä. möglich, oder durch die Minimalbodenbearbeitungsverfahren bis hin zur Direktsaat. Bemerkenswert für die Beurteilung der Vorteile des Pflugsaatverfahrens auf schwereren Böden ist, daß die nach dem Stand der Technik bereits mögliche Bestellsaat, also die Gerätekombination von Saatbettbearbeitungs-und Sägeräten, sich in den letzten 10 Jahren sehr rasch verbreitet hat. Mit diesem Verfahren werden die Überfahrten im fertig bearbeiteten Beet zur Durchführung der Aussaat vermieden, nicht aber eine Überfahrt des gepflügten Beetes. Immerhin werden durch die Reduzierung von zwei auf eine Überfahrt in der Sekundärbearbeitung beachtliche Mehrerträge erzielt, es wird mit bis zu 7,5%igen Ertragssteigerungen kalkuliert. Zum anderen sinkt die Wetterabhängigkeit bei diesem Verfahren.

Die Pflugsaat auf schwereren Böden, ermöglicht durch diesen erfindungsgemäßen Pflugkörper, gestattet nun die gänzliche Einsparung von Fahrspuren im Saatbett und damit eine weitergehende Vergleichmäßigung des Saathorizontes, dementsprechend gleichmäßigere Feldbestände, höhere Erträge und sinkende Aufwendungen z.B. in der Unkraut-/Ungrasbekämpfung.

Die Tiefenhaltung derartiger Kombinationen ist zudem verbessert durch die Möglichkeit der teilweisen Abstützung des Pfluggewichtes auf die Sekundärbearbeitungsgeräte bzw. deren nachlaufende Stützwalzen oder Wälzeggen.

Es sind angemessene Flächenleistungen bei Einsatz leistungsstarker Schlepper möglich, ohne daß die Vorfahrtgeschwindigkeit erhöht werden müßte. Sie kann beim Pflugsaatverfahren sogar abgesenkt werden, wodurch sich der Kraftbedarf überproportional vermindern läßt. Zugleich können bei den angekoppelten zapfwellengetriebenen Geräten die Werkzeuggeschwindigkeiten abgesenkt werden.

Gegenüber den Pflug-und Grubberersatzgeräten wie tiefarbeitende Fräsen/Zinkenrotoren mit aufgesattelten Drillmaschinen ist hervorzuheben, daß die Krume nicht auf der gesamten Arbeitstiefe gleich intensiv bearbeitet werden muß, ermöglicht durch die Trennung von Grundboden-und Saatbettbearbeitung, so daß eine einstellbar flache Saatbettbearbeitung erfolgen kann. Aus diesen Gründen können auch Böden höherer Feuchte mit Vorteil bearbeitet werden und die so bearbeitete Krume ist gezielt mit den gewünschten Krümelgrößen (Strukturreserve) in der jeweiligen Krumenschicht zu gestalten. Zudem sind die Vorzüge einer entmischenden Oberbodenbearbeitung mit Feinerde im eigentlichen Saathorizont und gröberen Aggregaten an der Bodenoberfläche auch mit zapfwellengetriebenen Geräten durch Absenkung der Werkzeuggeschwindigkeiten zu erreichen. Dadurch ist ein Verschlämmungsschutz auch bei großtropfigen Niederschlägen erreichbar.

Des weiteren wirkt sich der Umstand günstig aus, daß durch Änderungen der Fahrgeschwindigkeit die Ablage des Erdbalkens wegen seiner Führung durch die zwei Teilbleche nur geringfügig verändert wird. Dieser Vorteil ist gerade bei der Kombination mit Bestellsaatgeräten von Bedeutung, da hier abhängig von wechselnder Bodenbeschaffenheit des Ackers die Vorfahrtgeschwindigkeit im Beet varierbar sein muß, die Ablage der Erdbalken davon aber nur wenig beeinflußt sein sollte, weil sonst die Sekundärbearbeitungsgeräte jedesmal in ihrer Einstellung verändert werden müßten, also z.B. bei höher aufragenden Furchenkämmen tiefer arbeiten müßten, um genügend einzuebnen und zu krümeln.

Eine Ausgestaltung gemäß Unteranspruch 15 bietet folgende Vorteile:

Durch sie wird die Anwendbarkeit des Prinzips 'flach wenden -tief lockern' (Zwei-Schichtenbearbeitung) verbessert. Die Unterbodenlockerung erfolgt dabei, ohne daß das Gewicht des Oberbodens/ der umgewendeten Erdbalken die Lockerung gehindert. Es sind flache Anstellwinkel und größere Baulängen des Lockerungswerkzeuges ermöglicht.

Der Tiefgang des Pflugkörpers kann auf den oberen, stärker durchlüfteten Bereich der Krume begrenzt werden. Durch die regelmäßige Umwendung der Erdbalken wird Ausfallgetreide und Unkrautsamen sicher mit einer Schicht Erde ('reiner Tisch') bedeckt, so daß in Fruchtfolgen überwinternder Früchte mit Vegetationszeiten bis zu einem Jahr und darüber (Winterweizen, Winterraps) erforderlichenfalls nach der Ernte sofort neu bestellt werden kann, ohne daß wie bei der herkömmlichen Sommerfurche die Gefahr besteht, organische Substanz zu tief unterzupflügen. Dadurch würde deren Umsetzung und das Wachstum der nachfolgenden Kulturen behindert.

Eine Ausgestaltung gemäß Unteranspruch 16 bietet folgende Vorteile:

Durch die Verbindung der Pflugkörper unterhalb des eigentlichen Pflugrahmens erhalten die Pflugkörper einen Querverbund untereinander. Die Materialquerschnitte können verringert werden. Es sind Gewichtseinsparungen erzielbar.

Ausführungsbeispiele der Erfindung werden nachstehend anhand der Zeichnungen näher beschrieben. Vorab sei ein Überblick über die Zeichnungen gegeben.

Soweit die einzelnen Figuren Schnittdarstellungen enthalten, sind deren Schnittebenen, wenn nicht ausdrücklich anders beschrieben, senkrecht zu und mit Blickrichtung gleich der Arbeitsrichtung gelegt.

Es zeigen die Fig. 5 bis 19, Fig. 27 und 28 erfindungsgemäße Pflugkörperausgestaltungen mit unterschiedlich ausgeprägter Furchenräumung und mit Längsabständen zueinander im Falle mehrschariger Anordnung,

Fig. 20 bis 26 erfindungsgemäße Pflugkörperausgestaltungen ohne Furchenräumung und ohne Längsabstände zueinander im Falle mehrschariger Anordnung,

Fig. 29 und 30 eine erfindungsgemäße Pflugkörperausgestaltung mit stark verringerter Furchenräumung in einer mehrscharigen Anordnung ohne Längsabstand der Pflugkörper zueinander.

Im einzelnen zeigt

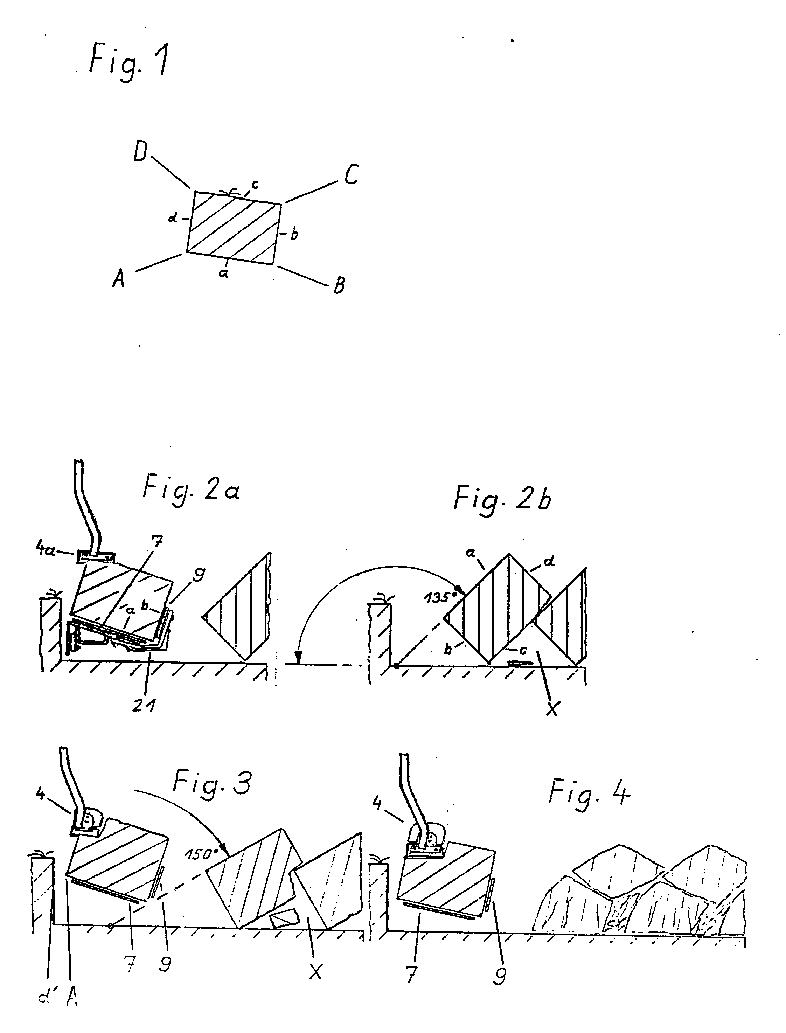

Fig. 1 einen rechteckigen Erdbalkenquerschnitt,

Fig. 2a einen Schnittdurch einen erfindungsgemäßen Pflugkörper mit einem unwendenden Erdbalken eines nicht schüttend zu pflügenden Bodens,

Fig. 2b denselben Erdbalken nach seiner Ablage,

Fig. 3 einen Schnitt wie in Fig. 2a, zusätzlich mit einem schmal und tief arbeitenden Vorschäler,

Fig. 4 einen Schnitt mit einem tief und breit arbeitenden Vorschäler,

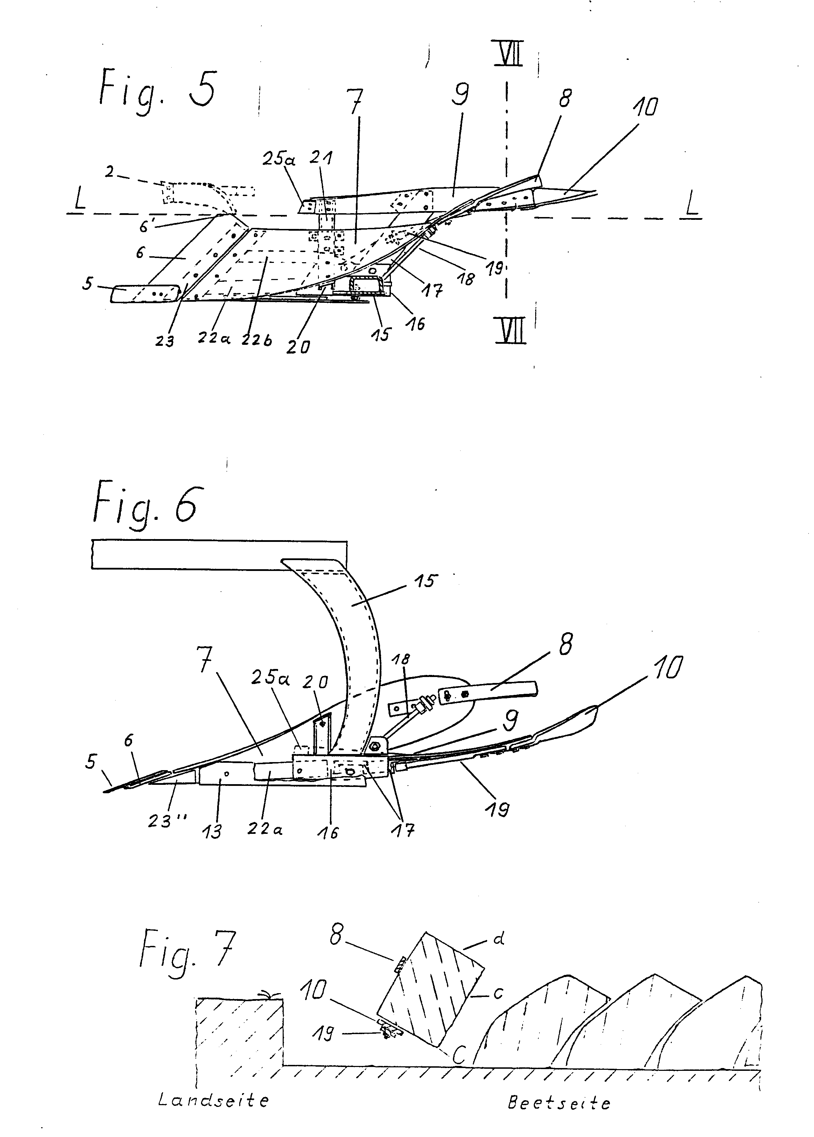

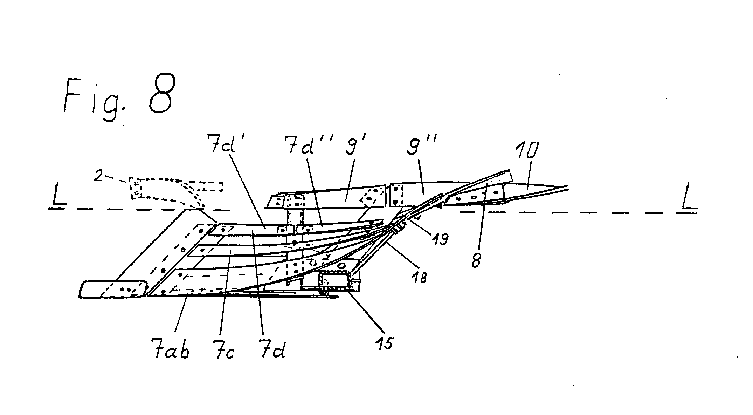

Fig. 5 die Draufsicht auf einen erfindungsgemäßen Pflugkörper mit Furchenräumung entsprechend der Körperarbeitsbreite oder größer,

Fig. 6 eine Seitenansicht des in Fig. 5 dargestellten Pflugkörpers,

Fig. 7 einen Schnitt VII -VII gemäß Fig. 5, mit einem sich gegen Ende seiner Umwendung befindlichen Erdbalken und drei bereits abgelegte Erdbalken eines mäßig schüttenden Bodens,

Fig. 8 die Draufsicht auf einen Pflugkörper gemäß Fig. 5, mit streifenförmigen Teilblechen,

Fig. 9 die Draufsicht auf einen erfindungsgemäßen Pflugkörper mit verringerter Furchenräumung,

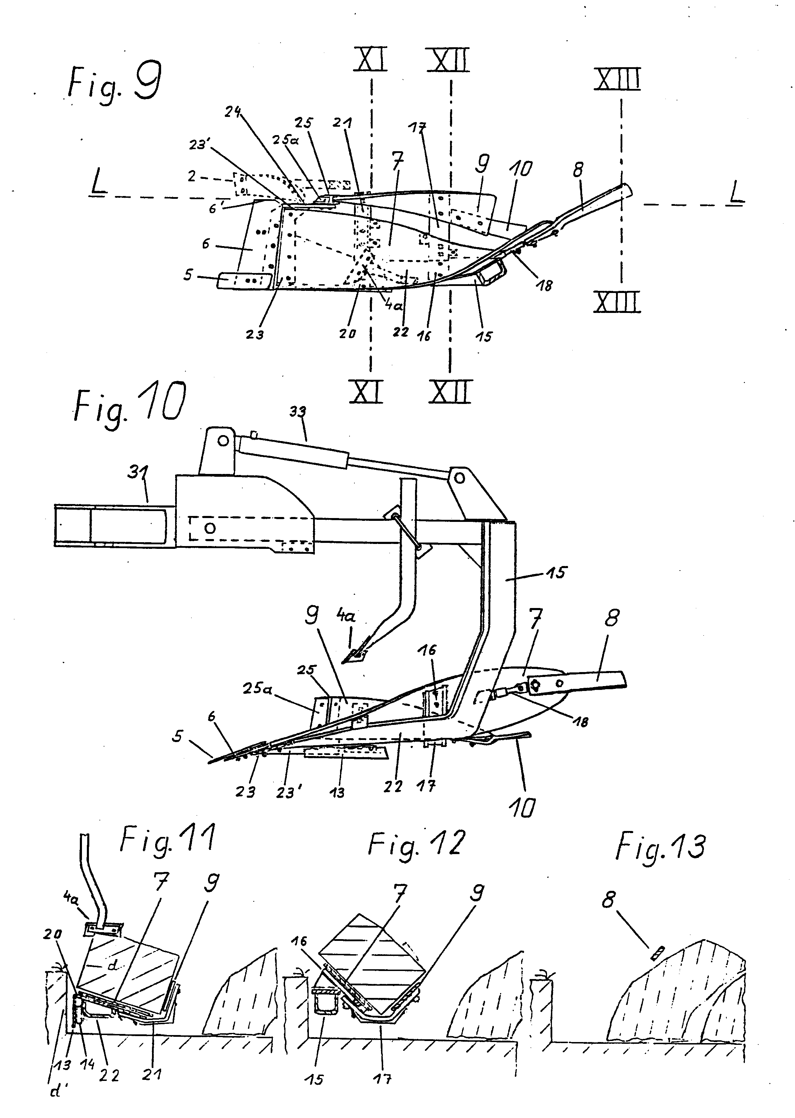

Fig. 10 eine Seitenansicht des in Fig. 9 dargestellten Pflugkörpers,

Fig. 11 einen Schnitt XI -XI gemäß Fig. 10,

Fig. 12 einen weiteren Schnitt XII -XII gemäß Fig. 10,

Fig. 13 einen weiteren Schnitt XIII -XIII gemäß Fig. 10 mit dem umgewendeten Erdbalken,

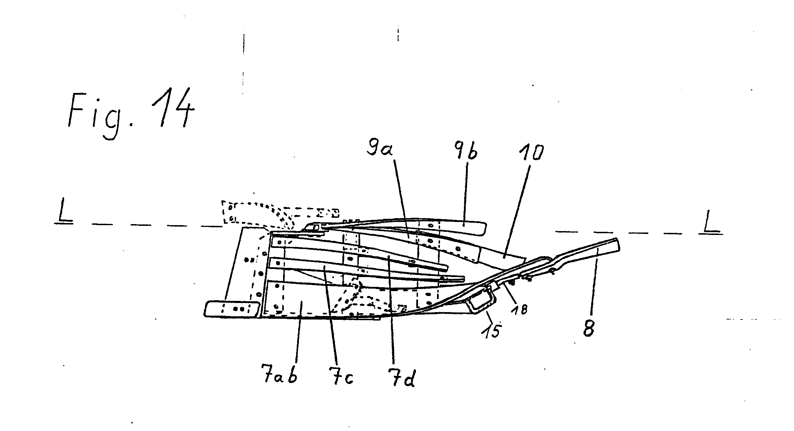

Fig. 14 die Draufsicht auf einen Pflugkörper mit streifenförmigen Teilblechen,

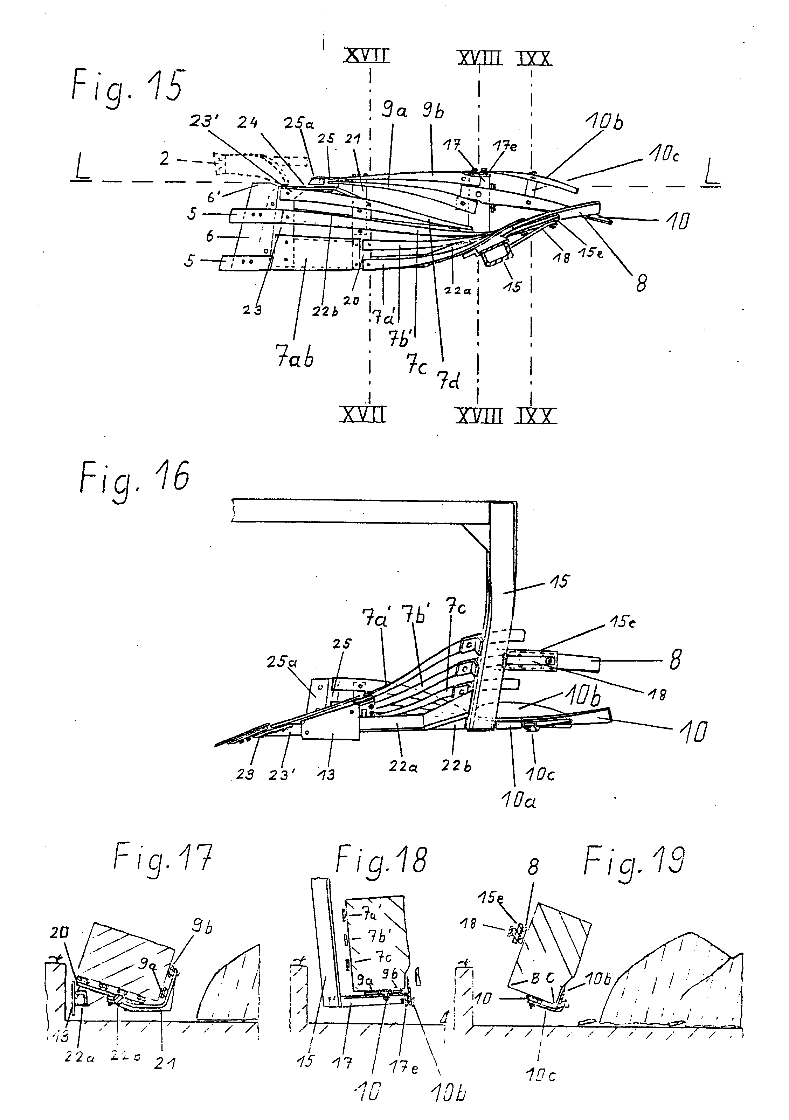

Fig. 15 die Draufsicht auf einen erfindungsgemäßen Pflugkörper mit streifenförmigen Teilblechen und einer stärker verringerten Furchenräumung,

Fig. 16 eine Seitenansicht des in Fig. 15 dargestellten Pflugkörpers,

Fig. 17 einen Schnitt XVII -XVII gemäß Fig. 15,

Fig. 18 einen Schnitt XVIII -XVIII gemäß Fig. 15,

Fig. 19 einen weiteren Schnitt IXX -IXX gemäß Fig. 15 und einen umgewendeten Erdbalken,

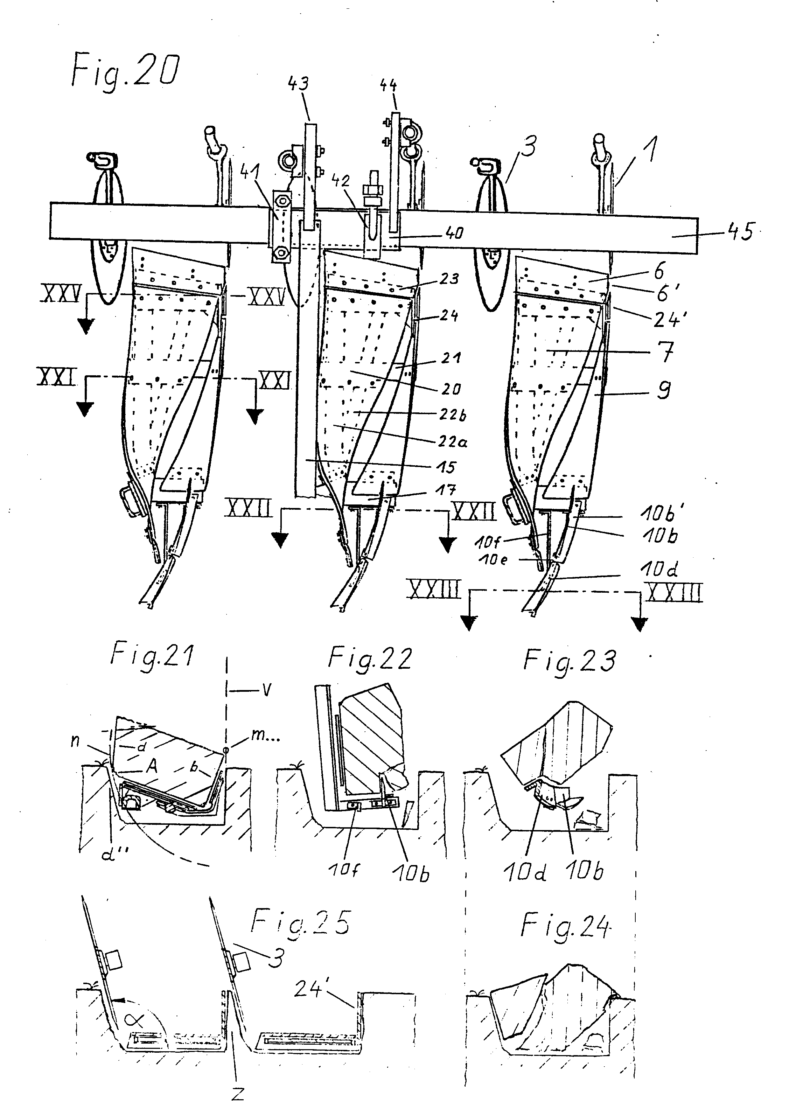

Fig. 20 die Draufsicht auf drei erfindungsgemäße Pflugkörper, die als Reihenpflugausführung an einem gemeinsamen Rahmen angeordnet sind,

Fig. 21 einen Schnitt XXI -XXI durch den linken Pflugkörper gemäß Fig. 20, mit Eintragung der Vertikalen, auf der sich die Drehpunkte des Erdbalkens zu Beginn seiner Umwendung bewegen, sowie der Angabe eines bestimmten Drehpunktes mit dem entsprechenden Bogenbahnverlauf des Erdbalkeneckpunktes A,

Fig. 22 einen Schnitt XXII -XXII durch den mittigen Pflugkörper gemäß Fig. 20,

Fig. 23 einen Schnitt XXIII -XXIII durch das spitzwinklige Endstück am rechten Pflugkörper gemäß Fig. 20,

Fig. 24 einen Schnitt nach dem rechten Pflugkörper gemäß Fig. 20, mit Angabe des Furchenquerschnittes und der Lage des umgewendeten und abgelegten Erdbalkens,

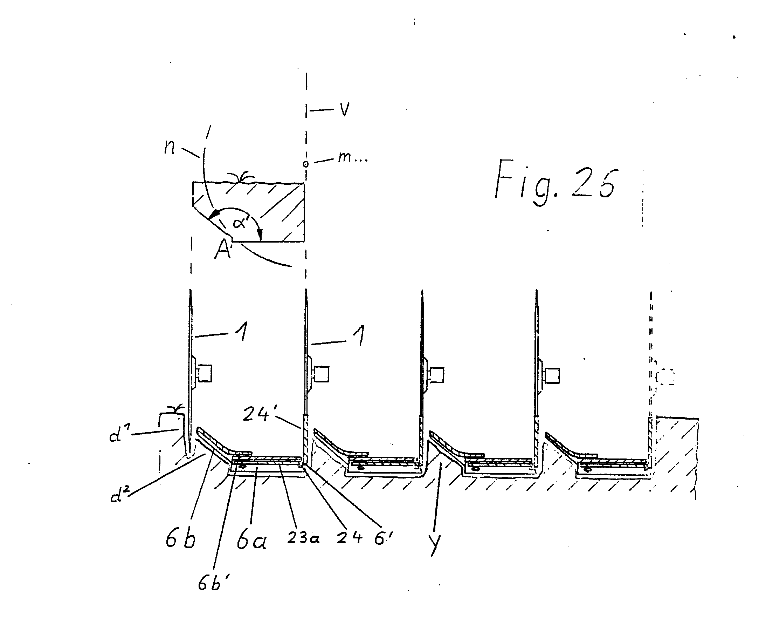

Fig. 25 einen Schnitt XXV -XXV durch den linken Pflugkörper gemäß Fig. 20, an den der mittige Pflugkörper herangeschoben ist, mit Angabe des nicht bearbeiteten Erdstreifens z,

Fig. 26 einen Schnitt durch die Trennvorrichtungen von vier erfindungsgemäßen Pflugkörpern in paralleler Anordnung, einschließlich eines Querschnittes der gebildeten Erdbalken,

Fig. 27 einen erfindungsgemäßen Pflugkörper, ausgeführt als zweischariger Pflug, beim Legen eines Auseinanderschlages,

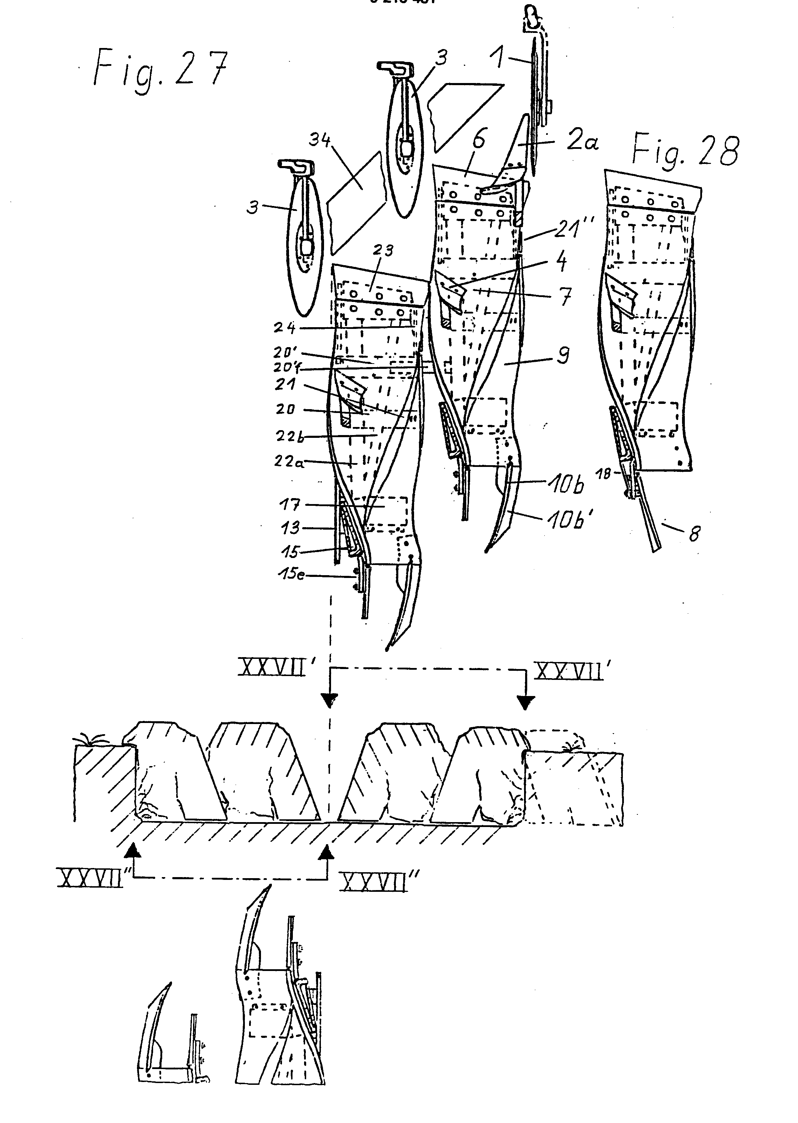

Fig. 28 einen Pflugkörper gemäß Fig. 27 mit einer stärker eingreifenden Teilblechverlängerung für die ehemalige Erdbalkenunterseite,

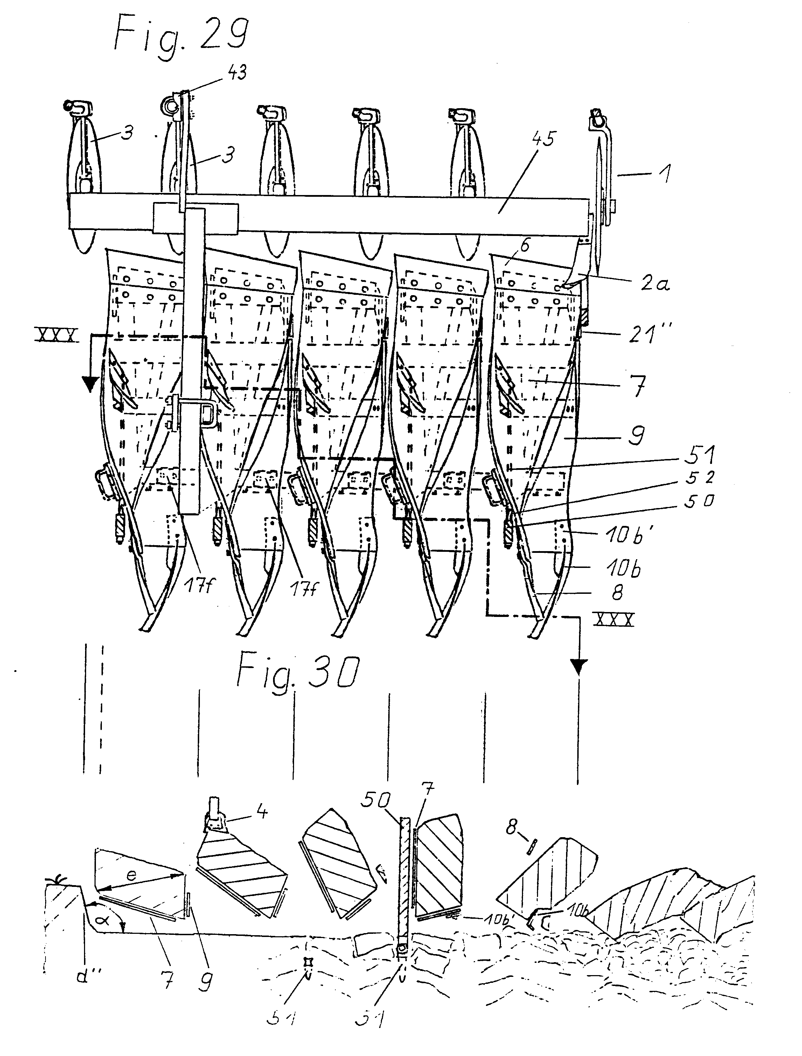

Fig. 29 die fünfscharige, parallele Anordnung eines erfindungsgemäßen Pflugkörpers mit den Trennvorrichtungen,

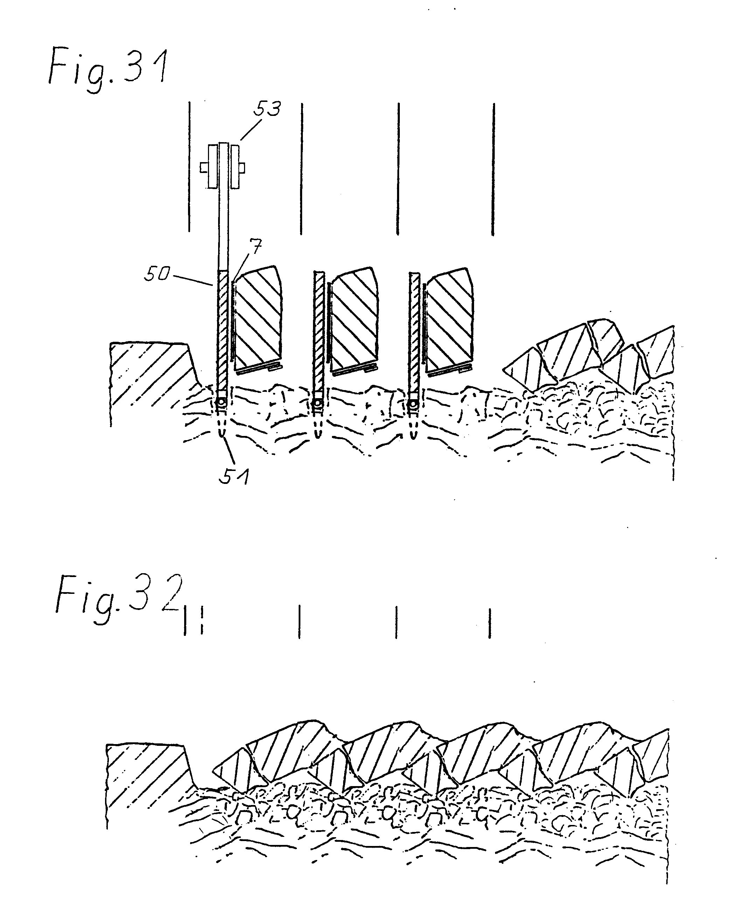

Fig. 30 einen Schnitt XXX -XXX gemäß Fig. 29,

Fig. 31 einen Abschnitt aus Schnitt XXX -XXX, entsprechend der Schnittführung durch den zweiten Pflugkörper von rechts in einer dreischarigen Anordnung einschließlich des Unterbodenlockerers,

Fig. 32 einen Schnitt gemäß Fig. 31 durch die umgewendeten Erdbalken und deren Ablage auf dem gelockerten unteren Krumenbereich.

Fig. 1 zeigt einen Schnitt durch einen im Uhrzeigerdrehsinn umwendenden Erdbalken am Beginn seiner Umwendung, mit seinen Eckpunkten A, B, C, D und seiner Erdbalkenunterseite a, der beetseitigen Seitenfläche b, seiner Oberseite c, die vor der Umwendung und Loslösung einen Teil der Ackeroberfläche bildete, sowie seiner landseitigen Seitenfläche d.

Fig. 2a zeigt einen Schnitt durch einen Erdbalken der in Figur 1 beschriebenen Art. Es ist die Einwirkung des erfindungsgemäßen Pflugkörpers im frühen Stadium der Umwendung bei einem Umwendungswinkel von 17° dargestellt. Dabei wirkt zunächst das Teilblech 7 auf die Erdbalkenunterseite a ein, während das Teilblech 9, geführt am Halter 21, auf die der Beetseite zugewandten Seitenfläche b des Erdbalkens einwirkt. Es ist ein flach eingestelltes Einlegeblech 4a eingezeichnet und seine Wirkungsweise angedeutet.

Fig. 2b zeigt die schematische Darstellung des umgewendeten, nicht schüttenden Erdbalkens mit der Eintragung des Hohlraumes x. Es wird ein Umwendungswinkel von 135° erreicht, das Verhältnis von Arbeitstiefe zu Arbeitsbreite des Pflugkörpers ist wie 1 : 1,41.

Fig. 3 zeigt denselben Schnitt wie zu Figur 2a beschrieben. Die Rumpfbauteile und die Anlage sind zur besseren Übersicht weggelassen.

Es ist die Lage des landseitigen unteren Erdbalkeneckpunktes A und die Furchenwand d'eingezeichnet. Infolge der seitlichen Verlagerung des Erdbalkens in Richtung Beet bildet sich zwischen dem Erdbalkeneckpunkt A und der Furchenwand d' ein Abstand aus.

Weiter ist der Eingriff eines tiefer eingestellten Vorschälers 4 in den Erdbalken dargestellt. Beetseitig befinden sich umgewendete Erdbalken. Es ist schematisch die teilweise Verfüllung des Hohlraumes x dargestellt. Dabei zeigt sich, daß trotz Vergrößerung des Pflugkörpertief tiefganges bei gleichbleibender Arbeitsbreite, also einer Verengung dieses Verhältnisses auf in diesem Fall 1 : 1,27, eine Vergrößerung des Umwendungswinkels auf 150° erzielt wird. Die Möglichkeit, den Umwendungswinkel zu vergrößern, ist beim Pflügen gegen den Hang und bei schwer zu pflügenden Böden zur sicheren Umwendung von Bedeutung.

Fig. 4 zeigt denselben Schnitt wie anhand Fig. 3 beschrieben, jedoch mit einem tief und breit arbeitenden Vorschäler, sowie die schematische Darstellung der umgewendeten Erdbalken in Form der gebrochenen Furche. Es ist das Pflügen zur Saat in einem nicht oder wenig schüttenden Boden dargestellt.

Fig. 5 zeigt die Draufsicht auf eine Ausführungsform des erfindungsgemäßen Pflugkörpers mit ausgeprägter Ausräumung der Furche entsprechend der Pflugkörperarbeitsbreite oder größer, zur Aufnahme der beetseitigen Bereifung der Zugmaschine.

Sein Rumpf ist gebildet aus der am Grindel 15 befestigten Winkelprofil-Grundplatte 16 mit dem vorderen Querträger 20, den Längsträgern 22a und 22b mit der Scharhalteplatte 23, an der das Schar 6 und der vordere Teil des der Erdbalkenunterseite a zugeordneten Teilblechs 7 befestigt ist, sowie den Haltern 17 und 21 und der Strebe 19 für das benachbarte Teilblech 9.

Der hintere Bereich des Teilblechs 7 mit seiner Verlängerung 8 ist am Rumpf über die Strebe 18 abgestützt.

Am Anfang des Teilblechs 9 ist der Kantenschutz 25a mit dem vorderen Halter 21 verschraubt.

Die in Arbeitsrichtung durch das beetseitige Scharschneidenende 6' verlaufende Linie ist gestrichelt eingezeichnet. Beetseitig von ihr ist, entsprechend dem Anspruch 2, das Teilblech 9 angeordnet.

Die Teilbleche 7 und 9 stoßen an ihren benachbarten Kanten nicht aufeinander, sondern lassen einen Freiraum, durch den im Bereich des Erdbalkeneckpunktes B abbröckelndes Erdreich abfließen kann.

Dieser Freiraum (lichte Weite) kann, zum Ende der Umwendung hin zunehmend, durch Rücktritte der benachbarten Teilblechkanten und durch Spreizung der Teilbleche voneinander, entsprechend der Volumenvergrößerung des Erdbalkens infolge seiner Auflockerung während der Umwendung, vergrößert werden.

Das gilt auch für alle weiter beschriebenen Ausführungsformen von Pflugkörpern.

Über die in Langlöchern befestigten Teilblechverlängerungen 8 und 10 wird eine Anpassung an unterschiedliche Einsatzbedingungen vorgenommen.

Vor dem Teilblech 9 ist der wahlweise anzuordnende Vorkörper 2 gestrichelt eingezeichnet. Er verringert die Notwendigkeit, am Beetanfang eine Spaltfurche zu legen, indem er je nach seiner Arbeitsbreite eine mehr oder weniger breite Vorfurche zieht, deren Volumen er landseitig befördert, damit einmal bei der Herfahrt der Schlepper nicht über das frisch aufgeworfene Erdreich fahren muß und zum anderen bei der Herfahrt nicht unerwünschte Pflanzen oder Teile davon auf das bei der Hinfahrt gelegte Beet befördert werden.

Fig. 6 zeigt eine Seitenansicht des in Fig. 5 dargestellten Pflugkörpers mit einem Ausbruch aus dem hinteren Halter 17, um die vordere Befestigung der Strebe 19 am Halter 17 sichtbar darzustellen, sowie einem Ausbruch aus der Anlage 13 zur besseren Sichtbarmachung der Winkelprofil-Grundplatte 16, weiter ist der Längsträger 22a und der landseitige Anfang des Halters 17 abgebildet. Vorn am Pflugkörper ist die landseitige Seitenfläche 23" der Scharhalteplatte 23 sowie das Schar 6 mit der Wechselspitze 5 dargestellt.

Fig. 7 zeigt einen Schnitt VII -VII mit dem sich gegen Ende seiner Umwendung befindlichen Erdbalken sowie das Beetprofil mit drei umgewendeten Erdbalken und die offene Furche nebst der Furchenwand mit einem Stück ungepflügten Ackers (Landseite).

Der in Wendung befindliche Erdbalken wird geführt durch das an der Strebe 19 abgestützte Teilblech 9 und der benachbarten Teilblechverlängerung 8, so daß eine gleichmäßige Ausräumung der Furche erreicht wird.

Der Erdbalken kann während der Umwendung seine Gestalt und sein Volumen verändern, da er an zwei benachbarten Seiten durch die Teilbleche 7 und 9 bzw. ihrer Verlängerungen 8 und 10 geführt wird. Er kann sich also in seiner Höhe über die ehemalige Erdbalkenoberseite c und in seiner Breite über die Seitenfläche d hinaus ausdehnen.

Fig. 8 zeigt die Draufsicht auf einen Pflugkörper gemäß Fig. 5 bis 7, an dessen Halterungen für die Teilbleche 7 und 9 jetzt ein streifenförmiges Teilblech 7ab, 7c, 7d zur Einwirkung auf die Erdbalkenseite a montiert ist und das Teilblech 9 sowie der Teilblechstreifen 7d in zwei Abschnitte, 9' und 9" sowie 7d' und 7d", quer unterteilt sind.

Die Streben 18 und 19 werden weiterverwandt, dadurch können ebenfalls die Teilblechverlängerungen 8 und 10 verwendet werden. Somit kann über sie auch beim Streifenpflugkörper eine Feineinstellung auf unterschiedliche Arbeitsbedingungen (wechselnde Bodenarten, verschiedene Arbeitstiefen) vorgenommen werden.

Fig. 9 zeigt die Draufsicht auf eine weitere Ausführungsform des erfindungsgemäßen Pflugkörpers.

Er bildet eine Furchenräumung entsprechend der Anordnung des Teilblechs 9 zur Linie L gemäß Anspruch 9 aus.

Sein Rumpf ist gebildet aus dem am Grindel 15 befestigten hinteren Querträger 16 und dem am Längsträger 22 befestigten Querträger 20, der Scharhalteplatte 23 und den Haltern 17, 21, 25 für das Teilblech 9.

Auf den Rumpfelementen sind die Teilbleche 7 und 9 montiert. Am Anfang des Teilblechs 9 ist der Vorderkantenschutz 25a befestigt.

Vorn ist das mit einem großen Scharschneidenwinkel ausgebildete Schar 6 auf der Scharhalteplatte 23 montiert. Auf dem Schar ist eine Wechselspitze 5 verschraubt.

Die Halter 17, 21, 25 für das Teilblech 9 können mit Rippen zur Stabilitätserhöhung versehen sein. Sie verlaufen an den vorderen und hinteren Schmalseite der Halter. Die Bohrungen bzw. die Muttern und Gewindeausläufe der Verschraubungen befinden sich dann geschützt zwischen den Rippen (siehe dazu auch Fig. 11 und 12).

Über die in Langlöchern befestigten Teilblechverlängerungen 8 und 10 kann eine Anpassung an unterschiedliche Einsatzbedingungen vorgenommen werden.

Durch Anordnung und entsprechendem Zusammenwirken der Teilbleche 7 und 9 ist es ermöglicht, eine kleinere offene Furchenbreite als die Pflugkörperarbeitsbreite zu legen. Vor dem Teilblech 9 ist der bereits zur Fig. 5 gegebenen Funktionsbeschreibung erwähnte Vorkörper 2 dargestellt.

Fig. 10 zeigt eine Seitenansicht des in Fig. 9 dargestellten Pflugkörpers mit einem Schnitt in Arbeitsrichtung durch die Scharhalteplatte 23 und einen Ausbruch aus der Anlage 13 zur besseren Sichtbarmachung des beetseitigen Endstücks 23' der Scharhalteplatte 23, an dem der Längsträger 24 für den vorderen Halter 25 befestigt ist. Vorn am Grindel befindet sich die Aufnahme 31, über die der Pflugkörper am Pflugrahmen befestigt wird.

An der Aufnahme kann vorn wahlweise die Halterung für ein Vorschneidewerkzeug (Scheibensech, Messersech) ausgeführt werden.

Am Grindel ist längs-und höhenverstellbar ein Einlegeblech 4a befestigt.

Weiter ist der Pflugkörper mit einer hydraulischen Steinsicherung 33 ausgerüstet.

Fig. 11 bis 13 zeigen die Arbeitsweise dieses Pflugkörpers anhand von drei Schnitten gemäß Fig. 9.

Dabei zeigt Fig. 11 die Lage des Erdbalkens und des Pflugkörpers in der Furche durch einen Schnittverlauf XI -XI hinter dem mittigen Halter 21.

Die Schar löst den Erdbalken vom Furchengrund und hebt ihn infolge seines Anstellwinkels und dem des nachgeschalteten Teilblechs 7 an. Dadurch wird die landseitige Seitenfläche d des Erdbalkens bzw. die Furchenwand d' gebildet.

Durch die Einwirkung der Teilbleche 7 und 9 erfolgt dann die Einleitung der Umwendung. Entstehende Seitenkraft wird an der Furchenwand über die am Längsträger 22 befestigte Anlagenhalteplatte 14, an der die Anlage 13 montiert ist, abgestützt.

Fig.12 zeigt die Lage des Erdbalkens durch einen Schnittverlauf XII -XII hinter dem hinteren Querträger 16 mit dem Halter 17, während ein Umwendungswinkel von 45° erreicht ist.

Fig. 13 zeigt einen Schnitt XIII -XIII durch die Teilblechverlängerung 8 und ihre Position am umgewendeten und abgelegten Erdbalken. Weiter ist die verringerte Furchenräumung abgebildet.

Fig. 14 zeigt die Draufsicht auf einen Pflugkörper gemäß der Figuren 9 bis 13, an dessen Halterungen für die Teilbleche 7 und 9 jetzt die streifenförmigen Teilbleche 7ab, 7c, 7d, 9a, 9b montiert sind.

Die Strebe 18 für den hinteren Teil des Teilblechs 7 wird weiterverwandt. Dadurch ist dieser Streifenpflugkörper mit der Teilblechverlängerung gemäß Fig. 9 -13 einsetzbar. Die Teilblechverlängerung 10 wird am Teilblechstreifen 9a und dem hinteren Halter 17 befestigt. Über die Teilblechverlängerungen ist eine Einstellbarkeit auf unterschiedliche Arbeitsbedingungen gegeben.

Gemäß der Volumenvergrößerung/Auflockerung des Erdbalkens während der Umwendung können die streifenförmigen Teilbleche entsprechend gespreizt zueinander ausgeführt werden. Dadurch vergrößert sich einmal -zum Ende des Pflugkörpers hin zunehmend -die lichte Weite der Teilblechstreifen der einzelnen Teilbleche untereinander, und zugleich die lichte Weite zwischen den Kanten der benachbarten Teilblechstreifen, hier gebildet aus 7d', 7d" und 9', 9". Beide Merkmale gelten auch für alle weiter beschriebenen Ausführungsformen von Pflugkörpern mit streifenförmigen Teilblechen, ohne jeweils gesondert noch einmal erwähnt zu werden.

Die Teilblechstreifen können aus Flachprofilen hergestellt werden.

Es ist ebenso möglich, die Form der Streifen auf Grobblech-Plattenmaterial abzuwickeln, diesen Umriß herauszutrennen und in einem nachfolgenden Arbeitsschritt die Verwindung des Teilblechstreifens entsprechend des jeweiligen Erdbalkenwendewinkels in einem dementsprechend geformten Gesenk auszubilden.

Die zweite Herstellungsweise ist insbesondere bei Teilblechstreifen günstig, die in ihrem Verlauf größere seitliche Abweichungen von der Linie der Arbeitsrichtung (Fahrtrichtung) -siehe auch die nachfolgenden Pflugkörperausführungsformenaufweisen.

Fig. 15 zeigt die Draufsicht auf eine weitere Ausführungsform mit stärker verringerter Furchenräumung entsprechend der Anordnung des Teilblechs 9 bzw. seiner Verlängerungen 10 und 10b zur Linie L gemäß Anspruch 10.

Die Teilbleche 7 und 9 sind als streifenförmige Bleche 7ab, 7a', 7b', 7c, 7d, 9a, 9b ausgebildet.

Sein Rumpf ist gebildet aus dem am Grindel 15 im Bereich eines Wendewinkels von 85° befestigten hinteren Halters 17 und den am Grindel 15 befestigten Längsträgern 22a und 22b, an denen der mittige Querträger 20 mit dem Halter 21 sowie vorn die Scharhalteplatte 23 mit dem vorderen Halter 25 befestigt ist. An der Scharhalteplatte 23 ist das beetseitige Endstück 23' eingezeichnet. Es ist über den kurzen Längsträger 24 mit dem ersten Querträger 20 verbunden.

Am Anfang des Teilblechs 9 ist der Kantenschutz 25a montiert.

Das Teilblech 9 ist mit einer am Halter 17 befestigten Verlängerung 10 versehen, die zur Stabilitätserhöhung mit der Untergurtung 10a ausgeführt ist. Die Verlängerung 10 ist weiter mit einer beetseitig versetzten, im wesentlichen zur Verlängerung 10 im gleichbleibenden Abstand verlaufenden hochstegigen Führungsschiene 10b versehen, die an der Halterendplatte 17e befestigt und über das Verbindungsstück 10c mit der Verlängerung 10 verbunden ist und mit dieser zusammen auf den Erdbalken einwirkt.

Das streifenförmige Teilblech 7 ist mit einer Verlängerung 8 versehen, die geführt wird von der am Grindel 15 befestigten, der Landseite zugewandten Verlängerungshalteplatte 15e, die mit der Strebe 18 am Grindel 15 abgestützt ist. Die Verlängerung 8 ist einstellbar auf unterschiedliche Einsatzverhältnisse durch ihre Verschraubung in Langlöchern auf der Halteplatte 15e, sowie der Möglichkeit der Verwendung von Distanzscheiben an seiner hinteren Verschraubung zwischen Verlängerung 8 und Halteplatte 15e zur Veränderung des Seitenrichtwinkels der Verlängerung 8.

Vor dem Teilblech 9 ist der bereits bei den zuvor beschriebenen Ausführungsformen erwähnte Vorkörper 2 dargestellt.

Fig. 16 zeigt eine Seitenansicht des in Fig. 15 dargestellten Pflugkörpers mit einem Abbruch an der verkürzten Anlage 13 und einen Schnitt in Längsrichtung durch die Scharhalteplatte 23 zur Sichtbarmachung des beetseitigen Endstücks 23', an dem der Halter 25 befestigt ist. Am Halter 15 ist der Vorderkantenschutz 25a befestigt.

Fig. 17 bis 19 zeigen die Arbeitsweise des in Fig. 15 und 16 dargestellten Pflugkörpers anhand dreier Schnitte. Dabei zeigt Fig. 17 einen Schnitt XVII -XVII gemäß Fig. 15 im Bereich des mittigen Querträgers 20. An dieser Schnittlinie ist ein Wendewinkel von 17° erreicht. Es ist die Position der Teilblechstreifen am Erdbalken dargestellt.

Fig. 18 zeigt einen Schnitt IIXX -IIXX gemäß Fig. 15 im Bereich des hinteren Halters 17. An dieser Schnittlinie ist ein Wendewinkel von 85° erreicht.

Es ist der Eingriff der hochstegigen Führungsschiene 10b in den Erdbalken sowie die Position der Teilblechstreifen am Erdbalken dargestellt.

Fig. 19 zeigt einen Schnitt IXX -IXX gemäß Fig. 15 im Bereich der Teilblechverlängerungen. An dieser Schnittlinie ist ein Wendewinkel von 110° erreicht.

Es ist der Eingriff der hochstegigen Führungsschiene 10b in den Erdbalken dargestellt sowie die Begrenzung dieses Eingriffs durch das Zusammenwirken mit der Teilblechverlängerung 10.

Es ist die Lage der Teilblechverlängerung 10 und der hochstegigen Führungsschiene und deren Verbindung durch das Verbindungsstück 10c gezeigt, sowie die Lage der Teilblechverlängerung 8 an der Verlängerungshalteplatte 15e mit der Strebe 18.

Infolge der Verzahnung des Erdbalkens im Bereich seines Eckpunktes C folgt der Erdbalken auch nach einem Wendewinkel von 90° mit der den Eckpunkten B und C zugewandten Hälfte des Erdbalkens dem Verlauf der gebildeten Schraubenlinien, die durch die Teilbleche bzw. deren Verlängerungen dargestellt sind.

Die Furchenräumung wird weiter verringert.

Fig. 20 zeigt die Draufsicht auf eine weitere Ausführungsform des erfindungsgemäßen Pflugkörpers, die ohne Ausräumung der Furche arbeitet.

Es eine Reihenpflugausführung mit 3 Pflugkörpern am gemeinsamen Rahmen 45 dargestellt.

Der Rumpf des mittigen Pflugkörpers ist mit Bezugszeichen versehen. Er ist gebildet aus dem am Grindel 15 im Bereich eines Wendewinkels von 85° befestigten hinteren Halter 17 und dem am Grindel 15 befestigten Längsträgern 22a und 22b, an denen der mittige Querträger 20 mit dem Halter 21 sowie vorn die Scharhalteplatte 23 mit dem vorderen Träger 24 an ihrer dem Beet zugewandten Seite ausgeführt ist.

Vor dem mittigen Pflugkörper ist seine Befestigung am Rahmen 45 über die beiden Bügel 41 und 42 und dem Anschlagstück 40 dargestellt. Am Anschlagstück 40 ist der Halter 43 für das aus der Vertikalen verschwenkte Scheibensech 3 und der Halter 44 für das vertikal stehende Scheibensech 1 zur Bildung der zweiten, 'beetseitigen' Furchenwand dargestellt.

Am rechten Pflugkörper sind die eigentlichen Werkzeuge des Pflugkörpers mit Bezugszeichen versehen: die Trennwerkzeuge, also die Seche 3 und 1 sowie die Schar 6 und der am vorderen Träger 24 angebrachte Teilblechvorderkantenschutz 24', der zugleich als Anlagesech fungiert, dann folgen die Teilbleche 7 und 9, dargestellt als jeweils in sich geschlossene Teilbleche.

Sie können auch ähnlich der Art wie beispielsweise in Fig. 15 und 16 gezeigt, aus streifenförmigen Teilblechen 7 ab, 7a'', 7b'', 7c, 7d, 9ab, 9a'', 9b'' gebildet sein. Das gilt auch für alle nachfolgenden Pflugkörperausführungen, die zur besseren Übersichtlichkeit ihrer Darstellung ebenfalls nicht mit streifenförmigen Teilblechen abgebildet sind.

Dann folgen die Verlängerungen des Teilblechs 9, nämlich die hochstegige Führungsschiene 10b mit der seitlichen Leiste 10b', verlängert um das spitzwinklige Endstück 10d, das durch die Verbindungsleiste 10e und der Stütze 10f geführt wird.

Das Teilblech 9 ist am Anfang über seine untere Schmalseite hinaus nach unten verlängert und über Bohrungen mit dem vorderen Träger 24 verschraubt.

Anhand der Fig. 21 bis 25 ist die Arbeitsweise dieser Ausführung anhand von Schnitten gemäß Fig. 20 dargestellt.

Fig. 21 zeigt dabei die Form und die Position des Erdbalkens und des Pflugkörpers in der Furche durch den Schnitt XXI -XXI hinter dem mittigen Querträger 20 bei einem Wendewinkel von 17°. Es ist die Vertikale v mit einem der Drehpunkte m eingetragen, um die bzw. um den der Erdbalken während seiner Anhebung und Umwendung ausschwenkt, sowie die Bogenbahn m des landseitigen unteren Erdbalkeneckpunktes A entsprechend dem Drehpunkt m.

Durch die Trennwerkzeuge wird ein Erdbalkenquerschnitt gebildet, der an seiner Seitenfläche d entsprechend des in Fig. 25 dargestellten Winkels $\alpha$ parallelogrammförmig und im Bereich der Seitenfläche b rechtwinklig gestaltet ist. Die notwendige Mindestgröße von $\alpha$ für eine störungsfreie Umwendung in der Weise, daß der beetseitige untere Erdbalkeneckpunkt A eine Bogenbahn n beschreibt, die die vom Scheibensech 2 gebildete Furchenwand d'' nicht überschneidet, ist einmal abhängig vom Verhältnis Arbeitsbreite - (Schnittbreite) : Erdbalkendicke (Tiefgang) und zudem von der Beziehung der Anhebung zum Umwendungswinkel des Erdbalkens, d.h. der Lage der jeweiligen Erdbalkendrehpunkte, die -miteinander verbunden -den Drehachsenverlauf der Erdbalkenführungsschale abbilden würden.

Wahlweise kann die Scheibensechhalterung 43 (in Fig. 20) auch als seitenverschiebbarer Halter am Rahmen 45 ausgebildet sein, und über Einlegestücke an der Klemmvorrichtung zur Fixierung des Secharms am Halter 43 eine andere Verschwenkung, also Vergrößerung des Winkels $\alpha$ (bei größerer Arbeitstiefe), oder Verkleinerung des Winkels $\alpha$ (bei Verringerung der Arbeitstiefe), eingestellt werden.

Fig. 22 zeigt die Lage des Erdbalkens und des Pflugkörpers in der Furche durch den Schnitt XXII -XXII nach dem hinteren Halter 17 bei einem Wendewinkel von 85°.

Es ist der Eingriff der hochstegigen Führungsschiene 10b in den Erdbalken dargestellt, die auch ab diesem Wendewinkel ein Abdrängen aus den von den Teilblechen bzw. deren Verlängerungen gebildeten Schraubenlinien vermeidet.

Fig. 23 zeigt die Lage des Erdbalkens und der Verlängerungen 10d und 10b des Teilblechs 9 in der Furche durch den Schnitt XXIII -XXIII gemäß Fig. 20 während eines Wendewinkels von 135°.

Durch die Einwirkung des spitzwinkligen Endstücks 10d auf den Erdbalken wird die richtige Positionierung des Erdbalkens über der Furche zu ihrer Wiederbedeckung mit dem aus ihr herausgelösten Erdbalken sowie die Erzielung eines sehr großen Wendewinkels erreicht.

Fig. 24 zeigt die Wiederbedeckung des Furchenquerschnitts mit dem Erdbalken, nachdem er die Führung durch das Endstück 10d verlassen hat.

Fig. 25 zeigt einen Schnitt XXV -XXV gemäß Fig. 20 am linken Pflugkörper im Bereich seiner Scharhalteplatte, an den der mittige Pflugkörper engmöglichst herangeschoben ist.

Es ist der Winkel α und der zwischen den Pflugkörpern verbleibende, nicht bearbeitete Erdstreifen z dargestellt.

Fig. 26 zeigt einen Schnitt durch 4 erfindungsgemäße Pflugkörper im Bereich ihrer Scharhalteplatte 23a. Die Pflugkörper ähneln der in Fig. 20 bis 25 dargestellten Ausführungsform. Dabei ist das mit der Scharschneidenebene den stumpfen Winkel α bildende Scheibensech 3 ersetzt durch die Kombination aus einem vertikal stehenden landseitigen Scheibensech 1 mit einem Scharmesser 6b, das einen stumpfen Winkel α' mit der Schneidenebene der Schar 6a bildet. Das Scharmesser 6b ist mit dem Steg 6b' versehen, durch das es mit der Schar 6a und der Scharhalteplatte 23a befestigt ist.

Es ist weiter ein Querschnitt des gebildeten Erdbalkens mit seinen landseitigen Seitenflächen über dem landseitigen Körper dargestellt, einschließlich der Vertikalen v, auf der sich die Drehpunkte des Erdbalkens zu Beginn seiner Umwendung bewegen, mit Angabe eines bestimmten Drehpunktes m einschließlich des entsprechenden Bogenbahnverlaufs n des Erdbalkeneckpunktes A.

Es ist das aus dem Unterboden herausragende, nicht umgewendete Erdstück y abgebildet. Oberflächig wird der Acker durchgängig bearbeitet im Unterschied zu der Ausführung gemäß Fig. 20.

Indem einzelne Pflugkörper nach oben ausgeschwenkt oder demontiert werden, ist auch mit dieser Ausführung ein Pflügen einzelner Reihen entsprechend der Ausführung in Fig. 20 durchführbar, weil der übrige Pflugkörper ähnlich wie in Fig. 20 gezeigt, ausgebildet werden kann. Der Teilblechbereich des Teilblechs 7, der zur Abstützung der unteren, abgeschrägten Erdbalkenseite auf diese einwirkt, kann klein ausgelegt und ab einem Umwendungswinkelbereich um 45° gänzlich eingespart werden. Das Teilblech 7 ist also dementsprechend in seinem hinteren Bereich verschmälert ausführbar.

Das Zeichnungsblatt mit der Fig. 27 zeigt Draufsichten auf eine weitere Ausführungsform des erfindungsgemäßen Pflugkörpers, abgebildet als zweischarige Ausführung mit verringerter Furchenräumung und verringertem Körperlängsabstand am Rahmen 34.

Der Rumpf des landseitigen Körpers ist mit Bezugszeichen versehen, er ist gebildet aus dem am Grindel 15 befestigten hinteren Halter 17 und den am Grindel befestigten Längsträgern 22a und 22b, an denen der mittige Querträger 20 mit dem Halter 21, der vordere Querträger 20' sowie vorn die Scharhalteplatte 23 mit der Längsstrebe 24 zum vorderen Querträger 20' befestigt ist. Über die Bügel 20' f können die Pflugkörper einen Querverbund untereinander erhalten.

Am beetseitigen Pflugkörper sind die eigentlichen Werkzeuge des Pflugkörpers mit Bezugszeichen versehen. Seine Trennvorrichtungen, bestehend aus dem Schar 6 und dem aus der Vertikalen verschwenkten Scheibensech 3, bilden parallelogrammförmige Erdbalkenquerschnitte. Der Teilblechvorderkantenschutz 21" ist zur einfachen Austauschbarkeit am vorderen Querträger 20' über Verschraubungen befestigt.

Beetseitig am vorderen Körper ist ein Vorkörper 2a ausgeführt, der die beetseitige Seitenfläche des Erdbalkens entsprechend des parallelogrammförmigen Erdbalkenquerschnittes des zweiten, landseitigen, Pflugkörpers formt. Dadurch kann am ersten Körper die Winkligkeit des Teilblechs 9 zu Teilblech 7 gleich der der anderen Körper sein. Auf das Legen einer Spaltfurche am Beetanfang kann verzichtet werden.

Diese zweischarige Ausführung ist dargestellt beim Legen einer Ausfurche am Beetende. In der oberen Blatthälfte ist die Hinfahrt an der zukünftigen Ausfurche abgebildet. Der Schnitt XXVII' -XXVII' hinter dem Pflug zeigt dabei die umgewendeten und abgelegten Erdbalken.

In der unteren Blatthälfte ist die Herfahrt an der soeben gezogenen Furche dargestellt, der Schnitt XXVII" -XXVII" hinter dem Pflug, senkrecht zur Arbeitsrichtung, aber mit Blick entgegen der Arbeitsrichtung, zeigt ebenfalls die umgewendeten und abgelegten Erdbalken. Es ist die gelegte kleine Ausfurche in Blattmitte abgebildet.

Rechts davon ist in gestrichelten Linien die zweite Hälfte eines Zusammenschlages dargestellt. Er würde durch eine Herfahrt in diesem Bereich des Ackers gelegt werden.

Fig. 28 zeigt einen der in Fig. 27 abgebildeten Pflugkörper, jedoch ohne die Teilblechverlängerung 10b und mit einer stärker eingreifenden Teilblechverlängerung 8, am Grindel 15 durch die Strebe 18 abgestützt. Damit wird die Seitenförderung des Erdbalkens in Beetrichtung verstärkt und es wird eine größere Furche ausgeräumt.

Fig. 29 zeigt die Draufsicht auf erfindungsgemäße Pflugkörper von der Art, wie sie in Fig. 27 dargestellt sind. Es ist eine 5 -scharige Anordnung ohne Längsabstand am Rahmen 45 abgebildet. Am rechten Körper sind die Werkzeuge des Pflugkörpers mit Bezugszeichen versehen. Unter den Körpern sind die Unterbodenlockerungszinken 51 mit dem Halmschutz 52 am eigenen Grindel 50 dargestellt. Am zweiten Körper von links ist die Befestigung des Vorschälers/des Einlegeblechs am Grindel sowie die Befestigung des Scheibensechs 3 an der Halterung 43 abgebildet. Weiter sind die Bügel 17f als Verbindung zwischen hinterem Halter des einen und dem Grindel des benachbarten Pflugkörpers dargestellt. Durch diese Bügel erhalten die Körper einen Querverbund untereinander.

Fig. 30 zeigt einen Schnitt XXX -XXX durch den Pflug gemäß Fig. 29. Seine Arbeitsweise ist durch die fünf in Umwendung befindlichen Erdbalkenschnitte verdeutlicht. Die senkrechten Striche über den Schnittdarstellungen entsprechen dabei den jeweiligen Scharschnittbreiten der darüber befindlichen, in Fig. 29 dargestellten Pflugkörper. Es ist die kürzere Erdbalkendiagonale e, der Winkel α und die Furchenwand d" eingezeichnet.

Fig. 31 zeigt einen Teilschnitt gemäß Fig. 29. Als Schnittführung ist die durch den zweiten Pflugkörper von rechts verlaufende Linie gewählt, um anhand eines dreischarigen Pfluges die räumliche Anordnung und die Wirkungsweise der Unterbodenlockerungseinrichtung mit dem Zinken 51 darzustellen. Im Bereich eines Wendewinkels von 90° sind die Grindel 50 der Untergrundlockerer neben den Rückseiten der Teilbleche 7 angeordnet.

Die Grindel sind in den Ausschwenkvorrichtungen 53 gelagert, die am Pflugrahmen befestigt sind.

Am Pflugrahmen kann eine Kupplungsmöglichkeit und ein Zapfwellendurchtrieb zum Anbau und Antrieb von fremdangetriebenen Pflugnachläufern oder Saatbettbearbeitungsgeräten und Sä-bzw. Pflanzgeräten ausgeführt werden. Damit kann in einmal die sofortige Einebnung auch schwerer Böden zur Vermeidung von Feuchtigkeitsverlusten in der Krume nach der Pflugfurche über aufgesattelte fremdangetriebene Pflugnachläufer erfolgen, zum anderen kann das Verfahren 'Pflugsaat' durchgeführt werden.

Fig. 32 zeigt einen Schnitt gemäß Figur 29 mit der Darstellung der auf dem gelockerten unteren Krumenbereich abgelegten Erdbalken. Es ist der Querschnitt der hinterlassenen offenen Furche dargestellt. Sie kann bei nachfolgender Sekundärbearbeitung ohne besondere Aufwendungen verfüllt werden.

Durch stärker gegen die Furchenwand ausgerichtete Teilblechverlängerungen 10b oder auch durch Einsatz des Endstücks 10d -wie in Fig. 20 und 23 dargestellt-kann eine Verfüllung der Furchen sowie eine stärkere Einebnung der Ackeroberfläche infolge der Vergrößerung des Wendewinkels erreicht werden.

## Ansprüche

1. Pflugkörper zum Wenden von Erdböden in Form von einzelnen, rechteckigen Erdbalken, deren Unterseite (a) durch ein Schar oder durch zwei Scharhälften benachbarter Pflugkörper gebildet wird, wobei die Pflugkörpergrindel an einem quer zur Arbeitsrichtung verlaufenden Tragbalken oder nahezu quer an Längsträgern angeordnet sind, wobei der Schar oder den zwei Scharhälften ein Streichblech nachgeschaltet ist, welches aus in Fahrtrichtung gesehen zueinander winklig stehenden Teilblechen gebildet ist, von denen ein Teilblech (9) der beetseitigen Seitenfläche (b) des zu formenden Erdbalkens zugeordnet ist, wobei die Teilbleche auf die Seitenflächen der etwa rechteckig ausgeschnittenen Erdbalken einwirken, in Art einer Schraubenlinie um eine gemeinsame Schraubenachse gewunden sind und miteinander eine Führungsschale bilden, welche am Tragbalken oder an den Längsträgern des Pflugrahmens über Haltevorrichtungen befestigt ist, und wobei die Teilbleche innerhalb der Arbeitsbreite der Pflugkörper, also innerhalb der während der Vorfahrt der vom Pflugschar des Körpers überstrichenen Fläche angeordnet und so geformt sind, daß beim Umwenden des Erdbalkens die zunächst zuunterst liegende Seitenfläche (a, Fig. 1) des Erdbalkens in Richtung der beetseitigen Seitenfläche (b) des Erdbalkens gelenkt wird,

dadurch gekennzeichnet,

daß die Führungsschale nur aus zwei winklig zueinander stehenden Teilbereichen gebildet wird, aus dem ersten, der Schar (6) oder den Scharteilen (6a, 6b) nachgeschalteten und der Erdbalkenunterseite (a) zugeordneten Teilblech (7) und aus dem zweiten, der beetseitigen Seitenfläche (b) des Erdbalkens zugeordneten Teilblech (9) besteht und daß die Führungsschale den Erdbalken nur an der Erdbalkenunterseite (a) und an der dieser Unterseite - (a) benachbarten beetseitigen Seitenfläche (b) unterstützt und die Führungsschale dabei entweder so geformt ist, daß der Erdbalken zum Beet hin verlagert wird, so daß sich zwischen der Furchenwand (d') und dem erdbalkenunterseitigen, der Furchenwand (d') zugeordneten Eckpunkt (A, Fig. 3) bereits am Anfang der Umwendung ein Abstand ausbildet, oder daß sich besagter Abstand ausbildet durch ein aus der Vertikalen um einen Winkel (α) gegen die Landseite verschwenktes Vorwerkzeug (3) zur Erzeugung einer abgeschrägten Furchenwand (d'', Fig. 21), oder daß sich besagter Abstand ausbildet durch ein vertikal angeordnetes Vorwerkzeug (1) zur Erzeugung des oberen Bereiches der Furchenwand (d', Fig. 26) und einem Scharmesser (6b) für den unteren Bereich der Furchenwand (d²), das in einem stumpfen Winkel (α') zur horizontal verlaufenden Schneidenebene des Scharteiles (6a) angeordnet ist.

2. Pflugkörper nach Anspruch 1, dadurch gekennzeichnet, daß die aus den zwei Teilbereichen - (7, 9) gebildete Führungsschale an einem gemeinsamen Pflugkörperrumpf über Haltevorrichtungen befestigt ist, und diese Haltevorrichtungen aus Halterungen gebildet sind, die für das erste Teilblech (7) aus einer Scharhalteplatte (23), dem vorderen - (20) und dem hinteren Querträger (16) bestehen und daß die Haltevorrichtungen für das zweite Teilblech (9) aus Halterungen (17, 21, 25) bestehen, die am Pflugkörperrumpf montiert sind und das zweite Teilblech (9) in seinem hinteren Bereich wahlweise durch eine Strebe (19) abgestützt wird.

3. Pflugkörper nach einem der Ansprüche 1 bis 2, dadurch gekennzeichnet, daß der Pflugkörperrumpf gebildet ist aus einem am Grindel (15) befestigten Längsträger (22), der wahlweise zweigeteilt ausgeführt ist (22a, 22b), und aus Querträgern (16, 20) sowie der Scharhalteplatte - (23), an der wahlweise ein beetseitiges Endstück - (23') ausgeführt ist, an dem ein vorderer kurzer Längsträger (24) befestigt und wahlweise mit dem ersten Querträger (20) verbunden ist.

4. Pflugkörper nach einem der Ansprüche 1 bis 3, dadurch gekennzeichnet, daß die Teilbleche (7, 9) gänzlich oder zum Teil aus in Längsrichtung zu den gebildeten Schraubenlinien verlaufenden Streifen (7a, 7b, 7c, 7d, 9a, 9b) gebildet sind, die wahlweise in Abschnitte (7ab, 7a', 7b') unterteilt und auswechselbar auf den Haltevorrichtungen befestigt sind.

5. Pflugkörper nach einem der Ansprüche 1 bis 4, dadurch gekennzeichnet, daß die Schar (6) eine Scharschneidenlinie aufweist, welche sich wahlweise einer rechtwinklig zur Arbeitsrichtung verlaufenden Linie annähert.

6. Pflugkörper nach einem der Ansprüche 1 bis 5, dadurch gekennzeichnet, daß an der Schar wahlweise mehrere Wechselspitzen (5) im Abstand voneinander montiert sind.

7. Pflugkörper nach einem der Ansprüche 1 bis 6, dadurch gekennzeichnet, daß am vorderen Halter (25) für das zweite Teilblech (9) ein Halter-/Teilblechvorderkantenschutz (25a) befestigt ist oder daß am vorderen Träger (24) ein Teilblechvorderkantenschutz in der Art eines Anlagensechs (24'), beide jeweils mit einer vorderen Schneidkante versehen, über Verschraubungen befestigt ist.

8. Pflugkörper nach einem der Ansprüche 1 bis 7, dadurch gekennzeichnet, daß das zweite Teilblech (9) neben einer durch das Scharschneidenende (6') in Arbeitsrichtung verlaufenden Linie (L), in Richtung der Beetseite versetzt angeordnet ist und der Pflugkörper mit einem Vorkörper (2) ausgerüstet ist, welcher vor dem zweiten Teilblech (9) angeordnet ist, und im Falle einer mehrscharigen Anordnung die Pflugkörper mit einem Längsabstand voneinander montiert sind und in diesem Falle nur der vorderste Pflugkörper mit einem Vorkörper (2) versehen ist.

9. Pflugkörper nach einem der Ansprüche 1 bis 7, dadurch gekennzeichnet, daß das zweite Teilblech (9) im wesentlichen parallel zu einer durch das Scharschneidenende (6') in Arbeitsrichtung verlaufenden Linie (L) angeordnet ist, und infolge seiner seitlichen Ausdehnung im vorderen und mittleren Bereich diese Linie (1) etwa zu beiden Seiten hin gleichmäßig überlappt und an seinem Ende ebenfalls in ihrem Schnittbereich liegt, und der Pflugkörper mit einem Vorkörper (2) ausgerüstet ist, welcher vor dem zweiten Teilblech (9) angeordnet ist, und im Falle einer mehrscharigen Anordnung die Pflugkörper mit einem Längsabstand voneinander montiert sind und in diesem Falle nur der vorderste Pflugkörper mit einem Vorkörper (2) versehen ist.

10. Pflugkörper nach einem der Ansprüche 1 bis 7, dadurch gekennzeichnet, daß das zweite Teilblech (9) im im wesentlichen parallel zu einer durch das Scharschneidenende (6') in Arbeitsrichtung verlaufenden Linie (L) angeordnet ist und das Teilblechende bzw. seine Verlängerungen (10, 10b) zur Landseite hin verlaufen, wobei die eine Verlängerung (10) als flachstegige Führungsschiene und die zweite Verlängerung als hochstegige Führungsschiene (10b) ausgebildet ist, welche in den Erdbalken einwirkt, wobei die flach-und die hochstegige Verlängerung (10, 10b) wahlweise über ein Verbindungsstück (10c) miteinander kombiniert sind oder die hochstegige Führungsschiene (10b) mit einer seitlichen Versteifungsrippe (10b') als ein Bauteil ausgebildet ist,und der Pflugkörper mit einem Vorkörper (2) ausgerüstet ist, welcher vor dem zweiten Teilblech (9) angeordnet ist, und im Falle einer mehrscharigen Anordnung die Pflugkörper mit einem Längsabstand voneinander montiert sind, wobei in diesem Falle nur der vorderste Pflugkörper mit einem Vorkörper (2) versehen ist.

11. Pflugkörper nach einem der Ansprüche 1 bis 7, dadurch gekennzeichnet, daß das zweite Teilblech (9) neben einer durch das Scharschneidenende (6') in Arbeitsrichtung verlaufenden Linie (L) in Richtung der Landseite versetzt angeordnet ist, und ein landseitig angeordnetes Scheibensech (3) einen stumpfen Winkel (α) mit der Scharschneidenebene bildet, derart, daß sich der Drehpunkt (m), um den der Erdbalken zu Beginn seiner Umwendung gewendet wird, sich auf der Vertikalen (v) bewegt, die auf dem beetseitigen Scharschneidenende (6') steht, und daß die Bogenbahn (n) des landseitigen unteren Erdbalkeneckpunktes (A) die von dem landseitigen Scheibensech (3) gebildete Schnittebene nicht überschneidet, und daß in Verlängerung des zweiten Teilblechs (9) eine hochstegige Führungsschiene (10b) ausgeführt ist, und daß sich an diese Verlängerung ein spitzwinkliges Endstück (10d) anschließt, dessen Oberlinie zum Ende hin ansteigt und zur landseitigen Furchenwand hin verläuft und über ein Verbindungsstück (10e) und durch die Stütze (10f) geführt wird, und daß im Falle einer mehrscharigen Ausführung diese Pflugkörper mit einem seitlichen Zwischenabstand voneinander und nebeneinander an einem gemeinsamen Rahmen - (45) angeordnet sind, und daß diese Pflugkörper wahlweise seitenverschiebbar über das Anschlagstück (40) mit den Bügeln (41, 42) am Rahmen (45) angeschlagen sind.

12. Pflugkörper nach einem der Ansprüche 1 bis 7 und Anspruch 11, dadurch gekennzeichnet,

daß eine beetseitige Trennvorrichtung aus einem vertikal angeordneten Scheibensech (1) und einem Anlagesech (24') gebildet ist, und die landseitige Trennvorrichtung aus einem vertikalen Scheibensech (1) in Kombination mit einem Scharmesser - (6b) gebildet ist, das in einem stumpfen Winkel - (α') zur Schneidenebene der Schar (6a) angeordnet ist, derart, daß sich der Drehpunkt (m), um den der Erdbalken zu Beginn seiner Umwendung gewendet wird, sich auf der Vertikalen (v) bewegt, die auf dem beetseitigen Scharschneidenende (6') steht, und daß die Bogenbahn (n) des landseitigen unteren Erdbalkeneckpunktes (A) die von dem Scharmesser (6b) und dem landseitigen Scheibensech - (1) gebildeten Schnittebenen nicht überschneidet.

13. Pflugkörper nach einem der Ansprüche 1 bis 7, dadurch gekennzeichnet, daß das zweite Teilblech (9) neben einer durch das Scharschneidenende (6') in Arbeitsrichtung verlaufenden Linie (L), in Richtung der Landseite versetzt, angeordnet ist, und ein landseitig angeordnetes Scheibensech (3) einen stumpfen Winkel (α) mit der Scharschneidenebene bildet, derart, daß die Bogenbahn (n) des landseitigen unteren Erdbalkeneckpunktes (A) die von dem landseitigen Scheibensech (3) gebildete Schnittebene nicht überschneidet, und daß die beiden Teilbleche (7, 9) in einem Winkel zueinander befestigt sind, der im wesentlichen dem besagten stumpfen Winkel (α) entspricht, und daß dieser Pflugkörper wahlweise mit einem beetseitig angeordneten Vorkörper (2a) ausgerüstet ist, der vor dem zweiten Teilblech (9) angeordnet ist, dessen der Landseite zugewandten Scharschneidenkante und dessen unterer Bereich der sich an sie anschließenden Vorkörperstreichblechkante einer Linie entsprechend dem besagten stumpfen Winkel (α) folgen, und daß im Falle einer mehrscharigen Ausführung der vorderste Pflugkörper mit einem derartigen Vorkörper (2a) ausgerüstet ist und diese Pflugkörper an einem gemeinsamen Rahmen (34) mit verkürztem Längsabstand aufeinander folgend angeordnet sind.

14. Pflugkörper nach einem der Ansprüche 1 bis 7 und Anspruch 13, dadurch gekennzeichnet, daß als Trennvorrichtung zur Erzeugung der Furchenwand ein Scheibensech (3) ausgeführt ist, das in einem stumpfen Winkel (α) zur Scharschneidenebene verschwenkt ist, derart, daß die kürzere Diagonale (e) des Erdbalkenquerschnittes gleich groß oder kleiner als die Arbeitsbreite des Pflugkörpers ist, und daß im Falle einer mehrscharigen Anordnung diese Pflugkörper nebeneinander ohne Längsabstand voneinander an einem gemeinsamen Rahmen (45) angeordnet sind, und wahlweise mit seitlichem Zwischenabstand voneinander, unter Verwendung des in Anspruch 12 genannten Vorkörpers (2a), angeordnet sind.

15. Pflugkörper wie in Anspruch 13 und 14, dadurch gekennzeichnet, daß im Bereich der vertikalen Stellung des der Schar (6) nachgeschalteten Teilblechs (7) neben dessen Rückseite ein Grindel (50) angeordnet ist, an dem der Unterbodenlockerungszinken (51) mit dem Halmschutz (52) montiert ist, und daß dieses Grindel (50) in einer Halterung - (53) ausschwenkbar geführt ist.

16. Pflugkörper wie in den Ansprüchen 13, 14 und 15, dadurch gekennzeichnet, daß im Falle einer mehrscharigen Anordnung die Pflugkörper

unterhalb des gemeinsamen Rahmens (34) wahlweise mit Bügeln (20f) verbunden sind, welche zwischen dem vorderen Querträger (20') des jeweils nachfolgenden Pflugkörpers und dem Längsträger (22a) des jeweils vorderen benachbarten Pflugkörpers montiert ist oder daß die Pflugkörper im Falle einer mehrscharigen Anordnung ohne Längsabstand zueinander unterhalb des gemeinsamen Rahmens (45) mit Bügeln (17f) verbunden sind, welche zwischen dem hinteren Halter (17) und dem Grindel (15) des sich jeweils beetseitig anschließenden Pflugkörpers montiert sind.

*Fig. 1*

*Fig. 2a*

*Fig. 2b*

135°

4a 7 9

a b

21

a d

b c

X

*Fig. 3*

*Fig. 4*

4

150°

4

7 9

X

7 9

d' A

Fig. 5

Fig. 6

Fig. 7

Landseite          Beetseite

Fig. 8

0 213 431

Fig. 9

Fig. 10

Fig. 11

Fig. 12

Fig. 13

Fig. 14

Fig. 15

Fig. 16

Fig. 17

Fig. 18

Fig. 19

Fig.20

Fig.21  Fig.22  Fig.23

Fig.25  Fig.24

Fig. 25

0 213 431

Fig. 27

Fig. 28

Fig. 29

43

3
3

45

1

6

2a

21''

7

9

51
52
50

10b'

10b

8

17f

17f

Fig. 30

4

50

7

8

e

α

d''

7

9

10b'

10b

51

51

Fig. 31

Fig. 32